(19) Europäisches Patentamt / European Patent Office / Office européen des brevets

(11) **EP 4 319 216 A1**

(12) **EUROPEAN PATENT APPLICATION**
published in accordance with Art. 153(4) EPC

(43) Date of publication:
**07.02.2024 Bulletin 2024/06**

(21) Application number: **22779127.4**

(22) Date of filing: **01.04.2022**

(51) International Patent Classification (IPC):
**H04W 4/40** (2018.01)      **H04W 72/04** (2023.01)

(52) Cooperative Patent Classification (CPC):
**H04W 4/40; H04W 72/04**

(86) International application number:
**PCT/CN2022/084772**

(87) International publication number:
**WO 2022/206947 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.04.2021 CN 202110364948**

(71) Applicant: **Sharp Kabushiki Kaisha
Sakai-shi
Osaka 590-8522 (JP)**

(72) Inventors:
• **ZHAO, Yinan
  Shanghai 201206 (CN)**
• **LIU, Renmao
  Shanghai 201206 (CN)**
• **LUO, Chao
  Shanghai 201206 (CN)**

(74) Representative: **Müller-Boré & Partner
Patentanwälte PartG mbB
Friedenheimer Brücke 21
80639 München (DE)**

(54) **METHOD EXECUTED BY USER EQUIPMENT, AND USER EQUIPMENT**

(57)    Provided in the present invention are a method performed by user equipment, and user equipment. The method performed by user equipment includes: acquiring one or more pieces of information related to inter-LTE coordination, the one or more pieces of information including configuration information of a resource pool set, a slot set, a sensing window, and a coordination resource window; and determining, according to SCI detected in the sensing window and the resource pool set, several resources located in the coordination resource window and satisfying a first resource collision condition. The first resource collision condition includes: resources in the same slot in the coordination resource window being reserved in two or more SCIs detected in the sensing window, and the slot belonging to the slot set.

FIG. 1

**Description**

TECHNICAL FIELD

The present invention relates to a method performed by user equipment, and user equipment.

BACKGROUND

SL communication (e.g., when SL resource allocation mode 2 is configured) can support inter-LTE coordination functions, e.g., coordination of resource (e.g., SL resources) allocation between two or more LTEs. For the inter-LTE coordination functions, problems such as definition, transmission, reception, etc., of inter-UE coordination messages need to be solved.

Prior Art Documents

Non-Patent Documents

Non-Patent Document 1: RP-152293, New WI proposal: Support for V2V services based on LTE sidelink
Non-Patent Document 2: RP-170798, New WID on 3GPP V2X Phase 2
Non-Patent Document 3: RP-170855, New WID on New Radio Access Technology
Non-Patent Document 4: RP-190766, New WID on 5G V2X with NR sidelink
Non-Patent Document 5: RP-201385, WID revision: NR sidelink enhancement

SUMMARY

In order to solve at least some of the above problems, provided in the present invention are a method performed by user equipment and user equipment. A suitable filtering condition is set in the process of determining an inter-UE coordination resource set, so as to reduce SCIs that need to be analyzed and processed, thereby ensuring that an inter-LTE coordination function is executed only for a destination UE or an SL connection satisfying a certain condition, while preventing a large number of messages indicating the same or similar inter-LTE coordination resources from being present on an SL at the same time to block the SL.

According to the present invention, provided is a method performed by user equipment, comprising: acquiring one or more pieces of information related to inter-UE coordination, the one or more pieces of information comprising configuration information of a resource pool set, a slot set, a sensing window, and a coordination resource window; and determining, according to SCI detected in the sensing window and the resource pool set, several resources located in the coordination resource window and satisfying a first resource collision condition. The first resource collision condition comprises: resources in the same slot in the coordination resource window being reserved in two or more SCIs detected in the sensing window, and the slot belonging to the slot set.

In addition, according to the present invention, provided is a method performed by user equipment, comprising: determining SCI, wherein in a 1st-stage SCI format corresponding to the SCI, one or more resources are indicated by "frequency resource assignment" and "time resource assignment" fields, and a combination of resource types respectively corresponding to the one or more resources is indicated by a "resource type" field; and transmitting the SCI.

In addition, according to the present invention, provided is a method performed by user equipment, comprising: determining a transmitting resource pool; and triggering a resource (re-)selection check according to a colliding resource indicated in a received inter-UE coordination message.

In addition, according to the present invention, provided is user equipment, comprising: a processor; and a memory, having instructions stored therein, wherein the instructions, when run by the processor, perform the aforementioned method.

Therefore, in the method provided in the present invention, a suitable filtering condition is set in the process of determining an inter-UE coordination resource set, so as to reduce SCIs that need to be analyzed and processed, thereby ensuring that an inter-LTE coordination function is executed only for a destination UE or an SL connection satisfying a certain condition, while preventing a large number of messages indicating the same or similar inter-LTE coordination resources from being present on an SL at the same time to block the SL.

BRIEF DESCRIPTION OF THE DRAWINGS

The above and other features of the present invention will be more apparent from the following detailed description in combination with the accompanying drawings, in which:

FIG. 1 is a flowchart showing a method performed by user equipment according to Embodiment 1 of the present invention.
FIG. 2 is a flowchart showing a method performed by user equipment according to Embodiment 2 of the present invention.
FIG. 3 is a flowchart showing a method performed by user equipment according to Embodiment 3 of the present invention.
FIG. 4 shows a block diagram of user equipment (LTE) according to the present invention.

DETAILED DESCRIPTION

The following describes the present invention in detail with reference to the accompanying drawings and specific embodiments. It should be noted that the present invention should not be limited to the specific embodiments described below. In addition, detailed descriptions of well-known technologies not directly related to the present invention are omitted for the sake of brevity, in order to avoid obscuring the understanding of the present invention.

In the following description, a 5G mobile communication system and its later evolved versions are used as exemplary application environments to set forth a plurality of embodiments according to the present invention in detail. However, it is to be noted that the present invention is not limited to the following embodiments, but is applicable to many other wireless communication systems, such as a communication system after 5G and a 4G mobile communication system before 5G.

Some terms involved in the present invention are described below. Unless otherwise specified, the terms used in the present invention adopt the definitions herein. The terms given in the present invention may vary in LTE, LTE-Advanced, LTE-Advanced Pro, NR, and subsequent communication systems, but unified terms are used in the present invention. When applied to a specific system, the terms may be replaced with terms used in the corresponding system.

3GPP: 3rd Generation Partnership Project
AGC: Automatic Gain Control
AMF: Access and Mobility Management Function
AS: Access Stratum
BWP: Bandwidth Part
CBR: Channel Busy Ratio
CP: Cyclic Prefix
CP-OFDM: Cyclic Prefix Orthogonal Frequency Division Multiplexing
CRB: Common Resource Block
CSI: Channel-State Information
DFT-s-OFDM: Discrete Fourier Transformation Spread Orthogonal Frequency Division Multiplexing
DL: Downlink
DM-RS: also referred to as DMRS, Demodulation Reference Signal
eNB: E-UTRAN Node B
E-UTRAN: Evolved UMTS Terrestrial Radio Access Network
FDRA: Frequency Domain Resource Assignment
FR1: Frequency Range 1
FR2: Frequency Range 2
GLONASS: GLObal Navigation Satellite System
gNB: NR Node B
GNSS: Global Navigation Satellite System
GPS: Global Positioning System
HARQ: Hybrid Automatic Repeat Request
HARQ-ACK: HARQ Acknowledgement
ID: Identity (or Identifier)
IE: Information Element
LSB: Least Significant Bit
LTE: Long Term Evolution
LTE-A: Long Term Evolution-Advanced

MAC: Medium Access Control

MAC CE: MAC Control Element

MIB: Master Information Block

MIB-SL: Master Information Block-Sidelink

MIB-SL-V2X: Master Information Block-Sidelink-Vehicle to Everything

MIB-V2X: Master Information Block-Vehicle to Everything

MME: Mobility Management Entity

MSB: Most Significant Bit

NAS: Non-Access Stratum

NDI: New Data Indicator

NR: "New Radio", fifth generation radio access technology

OFDM: Orthogonal Frequency Division Multiplexing

P2V: Pedestrian-to-Vehicle

P2X: Pedestrian-to-everything

PBCH: Physical Broadcast Channel

PDCCH: Physical Downlink Control Channel

PDCP: Packet Data Convergence Protocol.

PSBCH: Physical Sidelink Broadcast Channel

PSCCH: Physical Sidelink Control Channel

PSFCH: Physical Sidelink Feedback Channel

PSSCH: Physical Sidelink Shared Channel

PRB: Physical Resource Block

PSS: Primary Synchronization Signal

PSS-SL: Primary Synchronization Signal for Sidelink

PSSS: Primary Sidelink Synchronization Signal

QZSS: Quasi-Zenith Satellite System

RB: Resource Block

RBG: Resource Block Group

RE: Resource Element

RLC: Radio Link Control

RRC: Radio Resource Control

RV: Redundancy Version

S-BWP: Sidelink Bandwidth Part

S-MIB: Sidelink Master Information Block

S-PSS: Sidelink Primary Synchronization Signal

S-SSB: Sidelink SS/PBCH Block (Sidelink Synchronization Signal/Physical Broadcast Channel Block)

S-SSS: Sidelink Secondary Synchronization Signal

SCI: Sidelink Control Information

SCS: Subcarrier Spacing

SIB: System Information Block

SL: Sidelink

SL BWP: Sidelink Bandwidth Part

SL MIB: Sidelink Master Information Block

SL PSS: Sidelink Primary Synchronization Signal

SL SS: Sidelink Synchronization Signal

SL SSID: Sidelink Synchronization Signal Identity (or Sidelink Synchronization Signal Identifier)

SL SSB: Sidelink SS/PBCH Block (Sidelink Synchronization Signal/Physical Broadcast Channel Block)

SL SSS: Sidelink Secondary Synchronization Signal

SL-SCH: Sidelink Shared Channel

SLSS: Sidelink Synchronization Signal

SLSS ID: Sidelink Synchronization Signal Identity (or Sidelink Synchronization Signal Identifier)

SLSSID: Sidelink Synchronization Signal Identity (or Sidelink Synchronization Signal Identifier)

SSB: SS/PBCH Block (Synchronization Signal/Physical Broadcast Channel Block)

SSB-SL: SS/PBCH Block for Sidelink (Sidelink Synchronization Signal/Physical Broadcast Channel Block)

SSS: Secondary Synchronization Signal

SSS-SL: Secondary Synchronization Signal for Sidelink

SSSB: Sidelink SS/PBCH Block (Sidelink Synchronization Signal/Physical Broadcast Channel Block)

SSSS: Secondary Sidelink Synchronization Signal

Sub-channel: Sub-channel
S-GW: Serving Gateway
TB: Transport Block
UE: User Equipment
UL: Uplink
UMTS: Universal Mobile Telecommunications System
UPF: User Plane Function
V2I: Vehicle-to-Infrastructure
V2N: Vehicle-to-Network
V2P: Vehicle-to-Pedestrian
V2V: Vehicle-to-Vehicle
V2X: Vehicle-to-Everything
VRB: Virtual Resource Block

Unless otherwise specified, in all embodiments and implementations of the present invention:

- Optionally, "the first slot in the slot set S later than the slot n" refers to the first slot that is in the slot set S and that is temporally later than the slot n. The slot n may be in the slot set S, or may not be in the slot set S. For example, if the slot set S = {1, 3, 5}, and the slot n = 2, then the first slot in the slot set S later than the slot n is the slot 3. As another example, if the slot set S = {1, 3, 5}, and the slot n = 3, then the first slot in the slot set S later than the slot n is the slot 5.
- Optionally, "the first slot in the slot set S not earlier than the slot n" refers to the first slot that is in the slot set S and that is temporally not earlier than the slot n. The slot n may be in the slot set S, or may not be in the slot set S. For example, if the slot set S = { 1, 3, 5}, and the slot n = 2, then the first slot in the slot set S not earlier than the slot n is the slot 3. As another example, if the slot set S = {1, 3, 5}, and the slot n = 3, then the first slot in the slot set S not earlier than the slot n is the slot 3.
- Optionally, "the last slot in the slot set S earlier than the slot n" refers to the last slot that is in the slot set S and that is temporally earlier than the slot n. The slot n may be in the slot set S, or may not be in the slot set S. For example, if the slot set S = {1, 3, 5}, and the slot n = 4, then the last slot in the slot set S earlier than the slot n is the slot 3. As another example, if the slot set S = {1, 3, 5}, and the slot n = 5, then the last slot in the slot set S earlier than the slot n is the slot 3.
- Optionally, "the last slot in the slot set S not later than the slot n" refers to the last slot that is in the slot set S and that is temporally not later than the slot n. The slot n may be in the slot set S, or may not be in the slot set S. For example, if the slot set S = {1, 3, 5}, and the slot n = 4, then the last slot in the slot set S not later than the slot n is the slot 3. As another example, if the slot set S = {1, 3, 5}, and the slot n = 3, then the last slot in the slot set S not later than the slot n is the slot 3.
- Optionally, "send" and "transmit" are interchangeable with each other where applicable.
- Optionally, "symbol" may refer to an OFDM symbol where applicable.
- Optionally, any two of "within X", "in X", and "on X" are interchangeable with each other where applicable (for example, when one or more operations are performed on one or more resources). X may be one or more carriers (e.g., an SL carrier), or one or more BWPs (e.g., an SL BWP), or one or more resource pools (or sidelink resource pools), or one or more links (e.g., a UL, a DL, or an SL), or one or more channels (e.g., a PSSCH), or one or more sub-channels, or one or more RBGs, or one or more RBs, or one or more "occasions" (e.g., a PDCCH monitoring occasion, a PSSCH transmission occasion, a PSSCH reception occasion, a PSFCH transmission occasion, a PSFCH reception occasion, or the like), or one or more OFDM symbols, or one or more slots, or one or more subframes, or one or more half-frames, or one or more frames, or one or more arbitrary time-domain and/or frequency-domain and/or code-domain and/or spatial-domain resources, etc.
- Optionally, "higher layer" may refer to one or more protocol layers or protocol sublayers above a physical layer, such as a MAC layer, an RLC layer, a PDCP layer, a PC5-RRC layer, a PC5-S layer, an RRC layer, a V2X layer, an application layer, a V2X application layer, or the like.
- Optionally, "pre-configure" may be pre-configuration performed in a higher-layer protocol, such as pre-configured in a specific storage location in the UE (for example, pre-configured according to the specification of the higher layer protocol), or pre-configured in a specific storage location that can be accessed by the UE (for example, pre-configured according to the specification of the higher layer protocol).
- Optionally, "configuration" may be configuration performed in a higher layer protocol by means of signaling. For example, configuration is performed for the UE by means of RRC signaling.
- Optionally, "configured" may be replaced with "pre-configured", and vice versa.
- Optionally, "configured" may be replaced with "configured or pre-configured", and vice versa.

- Optionally, "a certain parameter has been configured" may be replaced with "a certain parameter has been provided", and vice versa.
- Optionally, "indicating certain information by means of a certain parameter" may be replaced with "providing certain information by means of a certain parameter", and vice versa.
- Optionally, "providing certain information by means of a certain parameter" may be replaced with "configuring certain information by means of a certain parameter", and vice versa.
- Optionally, "a certain parameter is configured" may be replaced with "a certain parameter is signaled", and vice versa.
- Optionally, "not configured" may be replaced with "not pre-configured", and vice versa.
- Optionally, "not configured" may be replaced with "not configured and/or not pre-configured", and vice versa.
- Optionally, "not configured" may be replaced with "not (pre-)configured", and vice versa.
- Optionally, the parameter *X* may refer to *"X-r8",* or *X-r9", or "X-r10",* or *"X-r11",* or *"X-r12",* or *"X-r13",* or *"X-r14",* or *"X-r15",* or *"X-r16",* or *"X-r17",* or the like where applicable (e.g., in the case that no ambiguity is caused), and vice versa. For example, *"pdsch-HARQ-ACK-CodebookList"* may be used to refer to a parameter *"pdsch-HARQ-ACK-CodebookList-r 16"* where applicable, and vice versa.
- Optionally, a time-domain resource may also be referred to as a time resource.
- Optionally, a frequency-domain resource may also be referred to as a frequency resource.
- Optionally, a resource block may refer to a virtual resource block (VRB), or may refer to a physical resource block (PRB), or may refer to a common resource block (CRB), or may refer to a resource block defined in another manner.
- Optionally, frequency-domain resource numbers may start from 0. For example, if the number of sub-channels (or subchannels) configured in a resource pool is $N_{\mathrm{subChannel}}^{\mathrm{SL}}$, the set of sub-channels in the resource pool may be represented by a set of corresponding sub-channel numbers as $\{0,\ 1,\ \ldots,\ N_{\mathrm{subChannel}}^{\mathrm{SL}} - 1\}$. As another example, a set of subcarriers in a resource block may be represented by a set of corresponding subcarrier numbers as $\{0, 1, ..., 11\}$.
- Optionally, time-domain resource numbers may start from 0. For example, for 30 kHz SCS, a set of slots in a subframe may be represented by a set of corresponding slot indexes as $\{0, 1\}$.
- Optionally, "SCI" may refer to an instance of an SCI format (e.g., SCI format 1-A), or a combination of an instance of a 1st-stage SCI format (e.g., SCI format 1-A) and an instance of a corresponding 2nd-stage SCI format (e.g., SCI format 2-A), where applicable. For example, in a received SCI format 1-A, each field corresponds to a determined value. As another example, in an SCI format 1-A for transmission (or, to be transmitted), a value has been determined (or is to be determined) for each field. As another example, in a received SCI format 1-A and a corresponding SCI format 2-A, each field of each SCI format corresponds to a determined value.
- Optionally, "SL transmission" may include one or more of the following:

  - ♦ PSSCH transmission.
  - ♦ PSCCH and PSSCH transmission.
  - ♦ PSCCH or PSSCH transmission.
  - ♦ PSFCH transmission.
  - ♦ S-SSB Transmission.

- Optionally, "PSSCH transmission" may be replaced with "PSCCH and/or PSSCH transmission" or replaced with "PSCCH/PSSCH transmission".
- Optionally, "SL resources" may include one or more of the following:

  - ♦ PSSCH.
  - ♦ PSCCH and PSSCH.
  - ♦ PSCCH or PSSCH.
  - ♦ PSFCH.
  - ♦ S-SSB.

- Optionally, if a resource pool and another resource pool correspond to the same frequency-domain resource (e.g., the same sub-channel set) and the same time-domain resource (e.g., the same slot set), then the two resource pools may be considered to be the same resource pool.

In communication based on device to device (D2D) technology, an interface between devices (also referred to as user equipment (UE)) may be referred to as a PC5 interface, and a corresponding transmission link on a physical layer may be referred to as a "direct link" or "sidelink" (SL for short) so as to be distinguished from an uplink (LTL for short) and a downlink (DL for short). Communication based on an SL may be referred to as sidelink (SL) communication, and a corresponding carrier may be referred to as an SL carrier. An SL based on LTE technology may be referred to as an LTE SL. An SL based on NR technology may be referred to as an NR SL. 5G V2X communication may be based on an LTE SL or an NR SL. Hereinafter, unless otherwise specified, "SL" refers to an NR SL, "SL communication" refers to NR SL communication, and "V2X communication" refers to NR SL-based V2X communication.

A physical layer of an SL can support transmissions In one or more modes, such as broadcast transmission, groupcast transmission, unicast transmission, and the like, in one or more of in-coverage, out-of-coverage, and partial-coverage scenarios.

For frequency range 1 (FR1), a subcarrier spacing (SCS, denoted as $\Delta f_{SL}$) corresponding to the SL may be 15 kHz (normal CP), or 30 kHz (normal CP), or 60 kHz (normal CP or extended CP). For frequency range 2 (FR2), an SCS corresponding to the SL may be 60 kHz (normal CP or extended CP), or 120 kHz (normal CP). Each SCS corresponds to one SCS configuration (denoted as $\mu_{SL}$). For example, $\Delta f_{SL}$ = 15 kHz corresponds to $\mu_{SL}$ = 0, $\Delta f_{SL}$ = 30 kHz corresponds to $\mu_{SL}$ = 1, $\Delta f_{SL}$ = 60 kHz corresponds to $\mu_{SL}$ = 2, $\Delta f_{SL}$ = 120 kHz corresponds to $\mu_{SL}$ = 3, and so on. As another example, for any given $\mu_{SL}$, $\Delta f_{SL} = 2^{\mu_{SL}} \cdot 15$ kHz. $\mu_{SL}$ may be an SCS configuration of an SL carrier. For example, all SL transmissions in one SL carrier use the same SCS configuration and/or the same CP. $\mu_{SL}$ may be an SCS configuration of a sidelink bandwidth part (SL BWP, or referred to as S-BWP, or referred to as SBWP, or referred to as SL-BWP, or referred to as BWP-SL, or referred to as BWP for short). For example, all SL transmissions in one SL BWP use the same SCS configuration and/or the same CP. $\mu_{SL}$ may be an SCS configuration of a resource pool. For example, all SL transmissions in one resource pool use the same SCS configuration and/or the same CP.

Signals and channels related to SL operations may include:

- an SL PSS (sidelink primary synchronization signal), or referred to as an S-PSS, or referred to as an SPSS, or referred to as an SL-PSS, or referred to as a PSS-SL, or referred to as a PSSS (primary sidelink synchronization signal), or the like;
- an SL SSS (sidelink secondary synchronization signal), or referred to as an S-SSS, or referred to as an SSSS (sidelink secondary synchronization signal), or referred to as an SL-SSS, or referred to as an SSS-SL, or referred to as an SSSS (secondary sidelink synchronization signal), or the like;
- a PSBCH (physical sidelink broadcast channel);
- a PSCCH (physical sidelink control channel);
- a PSSCH (physical sidelink shared channel); and
- a PSFCH (physical sidelink feedback channel).

The SL PSS, the SL SSS, and the PSBCH may be organized together into a block on time/frequency resources. The block is referred to as, for example, an S-SSB (sidelink synchronization signal/PSBCH block, or SSS/PSBCH block), or is referred to as an SSS/PSBCH block, or is referred to as an SS/PSBCH block, or is referred to as an S-SS/PSBCH block, or is referred to as an SL SSB, or is referred to as an SSSB, or is referred to as an SL-SSB, or is referred to as an SSB-SL. A transmission bandwidth (for example, 11 resource blocks) of the S-SSB may be located in a corresponding SL carrier (for example, located in one SL BWP configured in the SL carrier). The SL PSS and/or the SL SSS may carry an SL SSID (sidelink synchronization identity, or sidelink synchronization identifier, or sidelink synchronization signal identity, or sidelink synchronization signal identifier, or sidelink identity, or physical-layer sidelink identity, or referred to as SL-SSID, or referred to as SSID-SL, or referred to as SLSSID, or referred to as SLSS ID, or referred to as S-SSID, or the like), and the PSBCH may carry an SL MIB (sidelink master information block, or referred to as SL-MIB, or referred to as S-MIB, or referred to as MIB-SL, or referred to as MasterInformationBlockSidelink), which is configured by means of, for example, a parameter *masterInformationBlockSidelink.*

On the SL, a time-domain resource and/or a frequency-domain resource used to transmit the S-SSB may be configured by means of higher-layer parameter(s). For example, in the frequency domain, a location of the S-SSB in the frequency domain may be configured by means of a parameter *absoluteFrequencySSB-SL* (or a parameter *sl-AbsoluteFrequencySSB*). For another example, in the time domain, one or more synchronization configuration items may be configured by means of a parameter *sl-SyncConfigList*. In each synchronization configuration item, $N_{\text{period}}^{\text{S-SSB}}$ S-SSBs within an S-SSB period having a length of 16 frames can be configured by means of a parameter *numSSBwithinPeriod-SL* (or a parameter *sl-NumSSB-WithinPeriod*). The index of a slot where an S-SSB having a number (or an index) of $i_{\text{S-SSB}}$ ($0 \leq i_{\text{S-SSB}} \leq N_{\text{period}}^{\text{S-SSB}} - 1$) is located in the period having a length of 16 frames may be

$N_{\text{offset}}^{\text{S-SSB}} + \left(N_{\text{interval}}^{\text{S-SSB}} + 1\right) \cdot i_{\text{S-SSB}}$, wherein $N_{\text{offset}}^{\text{S-SSB}}$ may be configured by means of a parameter *timeOffsetSSB-*

*SL* (or a parameter *sl-TimeOffsetSSB*), and $N_{\text{interval}}^{\text{S-SSB}}$ may be configured by means of a parameter *timeIntervalSSB-SL* (or a parameter *sl-TimeInterval*).

A synchronization source (or referred to as a synchronization reference, or referred to as a synchronization reference source) related to SL synchronization may include a GNSS (global navigation satellite system, a gNB, an eNB, and a LTE (for example, NR UE, or LTE UE, or NR UE or LTE UE). A UE serving as a synchronization source (for example, a UE transmitting the S-SSB) may be referred to as SyncRefUE.

Examples of the GNSS may include GPS (Global Positioning System), GLONASS (GLObal NAvigation Satellite System), BeiDou (Beidou Navigation Satellite System), Galileo (Galileo Navigation Satellite System), QZSS (Quasi-Zenith Satellite System), etc.

One or more (e.g., one) SL BWPs may be configured in one SL carrier, and one or more resource pools (or referred to as SL resource pools) may be configured within one SL BWP. One resource pool may be considered to be a set of time-domain and frequency-domain resources, and the time-domain and frequency-domain resources may be used for SL transmission and/or reception (optionally, the SL transmission and/or reception described herein does not include S-SSB transmission and/or reception).

For each SL BWP, a starting symbol that can be used for the SL may be configured by means of a parameter *startSLsymbols* (or a parameter *sl-StartSymbol*) (for example, the symbol is numbered as $l_{start}^{SL}$ in the slot), and the number of symbols that can be used for the SL may be configured by means of a parameter *lengthSLsymbols* (or a parameter *sl-LengthSymbols*) (for example, the number of symbols is denoted as $N_{length}^{SL}$). The $N_{length}^{SL}$ symbols may be consecutive symbols. A value set of $l_{start}^{SL}$ may be denoted as $S_{start}^{SL}$, for example,

$$S_{start}^{SL} = \{0, 1, 2, 3, 4, 5, 6, 7\}$$, and a value set of $N_{length}^{SL}$ may be denoted as $S_{length}^{SL}$, for example,

$$S_{length}^{SL} = \{7, 8, 9, 10, 11, 12, 13, 14\}$$. The "symbols that can be used for SL transmission" may be referred to as "SL symbols". If a set of SL symbols (in chronological order) is denoted as $\{l_1^{SL}, l_2^{SL}, ..., l_{N_{length}^{SL}}^{SL}\}$, then

$$l_1^{SL} = l_{start}^{SL}, \quad l_2^{SL} = l_{start}^{SL} + 1, \quad ......, \quad l_{N_{length}^{SL}}^{SL} = l_{start}^{SL} + N_{length}^{SL} - 1\}$$. For example, if $l_{start}^{SL} = 7$ and

$N_{length}^{SL} = 7$, then the set of SL symbols is {7, 8, 9, 10, 11, 12, 13}. Optionally, the set of SL symbols may be applicable to all resource pools in the corresponding SL BWP. Optionally, the time-domain and frequency-domain resources corresponding to the S-SSB may be configured independently of the resource pool, and accordingly, the set of SL symbols is not applicable to S-SSB transmission and/or reception.

Only a slot meeting a certain condition can be configured to be used for the SL (e.g., used for SL transmission and/or reception). For example, such a slot is referred to as an "SL slot", or a "candidate SL slot", or an "SL candidate slot", or a "slot that can be configured to be used for a certain resource pool" or a "slot that may belong to a certain resource pool". A set of all slots within one SFN period (or one DFN period) is denoted as $T_{all}$ = {0,1, ... ,10240 × $2^{\mu SL}$ - 1}, and a set of all "SL slots" within one SFN period (or one DFN period) is denoted as $T_{all}^{SL} = \{t_0^{SL}, t_1^{SL}, \cdots, t_{T_{max}-1}^{SL}\}$, where $T_{max}$ is the number of elements in the set $T_{all}^{SL}$. Optionally, for $0 \le i < T_{max}$, $t_i^{SL}$ is numbered within the SFN period (or the DFN period), (i.e., $0 \le t_i^{SL} < 10240 \times 2^{\mu_{SL}}$). Optionally, $t_0^{SL} < t_1^{SL} < \cdots < t_{T_{max}-1}^{SL}$.

The set $T_{all}^{SL}$ may be acquired by excluding the following slots from the set $T_{all}$:

- A slot configured with an S-SSB (for example, the number of such slots is denoted as $N_{S\_SSB}$).
- A slot satisfying a first LTL configuration condition (for example, the number of such slots is denoted as $N_{nonSL}$), wherein

   ♦ Optionally, for a slot $t$, the first LTL configuration condition may be that: in the slot $t$, at least one of the symbols $l_{start}^{SL}, l_{start}^{SL} + 1, ......, l_{start}^{SL} + N_{length}^{SL} - 1$ is not configured to be a UL symbol. The "configured to be a UL symbol" may be being configured to be a UL symbol in a semi-persistent manner, for example, configured by means of a parameter *tdd-UL-DL-ConfigurationCommon,* or configured by means of a parameter *sl-TDD-Configuration,* or configured by means of a parameter *sl-TDD-Config.*

- A reserved slot. For example, optionally, the reserved slot may be determined in the following manners:

  ♦ A set of remaining slots resulting from excluding, from the set $T_{all}$, the $N_{S\_SSB}$ slots configured with an S-SSB and the $N_{nonSL}$ slots satisfying the first LTL configuration condition is denoted as

  $$T_{remaining} = \{l_0, l_1, \dots, l_{10240 \times 2^{\mu} - N_{SSSB} - N_{nonSL} - 1}\}$$ . Optionally, the slots in the set $T_{remaining}$ are arranged in ascending order of slot indexes (or numbers).

  ♦ If the slot $l_r$ ($0 \leq r < 10240 \times 2^{\mu} - N_{SSSB} - N_{nonSL}$) satisfies $$r = \left\lfloor \frac{m \cdot (10240 \times 2^{\mu} - N_{S_{SSB}} - N_{nonSL})}{N_{reserved}} \right\rfloor$$ , then the slot $l_r$ is a reserved slot, where m = 0, 1, ......, $N_{reserved}$ - 1, and $N_{reserved}$ = $$\left(10240 \times 2^{\mu} - N_{S_{SSB}} - N_{nonSL}\right) \bmod L^{SL}_{reserved,thresh}$$ . $L^{SL}_{reserved,thresh}$ may be a predefined or configured or pre-configured value, or one of a plurality of predefined or configured or pre-configured values (for example, a value determined from one of a plurality of predefined or configured or pre-configured values according to a resource pool to be configured).

For each resource pool (for example, denoted as *u*),

- In the frequency domain, each sub-channel may consist of one or more resource blocks, and the specific number of the resource blocks (for example, referred to as a sub-channel size, such as denoted as $n^{SL,u}_{subCH,size}$ ) may be configured by means of a parameter (for example, *sl-SubchannelSize*). The $n^{SL,u}_{subCH,size}$ resource blocks may be consecutive in the frequency domain.
- In the frequency domain, the index (or the number) of a starting resource block of a starting sub-channel of the resource pool in the corresponding SL BWP may be configured by means of a parameter (e.g., *sl-StartRB-Subchannel),* and is denoted as, for example, $n^{SL,u}_{RB,start}$ .

- In the frequency domain, the number (for example, denoted as $N^{SL,u}_{subCH}$ ) of sub-channels occupied by the resource pool may be configured by means of a parameter (e.g., *sl-NumSubchannel*). The $N^{SL,u}_{subCH}$ sub-channels may be consecutive in the frequency domain.

- In the frequency domain, the number (denoted as $N^{SL,u}_{PRB}$ ) of PRBs occupied by the resource pool may be configured by means of a parameter (e.g., *sl-RB-Number*). Optionally, the UE may assume that the last $N^{SL,u}_{PRB} \bmod n^{SL,u}_{subCH,size}$ PRBs in the $N^{SL,u}_{PRB}$ PRBs are not to be used.

- In the frequency domain, sub-channels in a resource pool may be respectively numbered as $0, 1, \dots, N^{SL}_{subch} - 1$ in certain order (for example, in the order from low frequency to high frequency). A sub-channel numbered as i may be referred to as "sub-channel *i*" ( $0 \leq i \leq N^{SL}_{subch} - 1$ ).

- In the time domain, a slot bitmap (for example, corresponding bits are denoted as $b_0$, $b_1$, ......, $b_{L^{SL,u}_{bitmap} - 1}$, where $L^{SL,u}_{bitmap}$ is the number of bits in the slot bitmap) may be configured by means of a parameter (for example, *sl-TimeResource*) to determine a subset (for example, denoted as $T^{SL}_u$ ) of the set $T^{SL}_{all}$ . The set $T^{SL}_u$ is the slot set of the resource pool. Specifically,

9

♦ Optionally, the set $T_u^{SL}$ may be initialized to be an empty set.

♦ Optionally, each $k$ (for example, in ascending order of $k$) satisfying

$0 \le k < 10240 \times 2^\mu$ - $N_{SSSB}$ - $N_{nonSL}$ - $N_{reserved}$ is denoted as $k' = k \bmod L_{bitmap}^{SL,u}$ . If $b_{k'}$ = 1, then the slot $t_k^{SL}$ in the set $T_{all}^{SL}$ belongs to the set $T_u^{SL}$ (or, the slot $t_k^{SL}$ in the set $T_{all}^{SL}$ is added to the set $T_u^{SL}$).

♦ Optionally, elements in the set $T_u^{SL}$ may be re-labeled as several slots having consecutive subscripts (for example, labeled according to the order of the elements being added to the set $T_u^{SL}$, such as sequentially labeled as $t_0'^{SL,u}$, $t_1'^{SL,u}$, $\cdots\cdots$, $t_{T'^u_{max}-1}'^{SL,u}$), i.e., $T_u^{SL} = \{t_0'^{SL,u}, t_1'^{SL,u}, \ldots, t_{T'^u_{max}-1}'^{SL,u}\}$, where $T'^u_{max}$ is the number of elements in the set $T_u^{SL}$.

Optionally, $L_{reserved,thresh}^{SL}$ may be related to a resource pool to be configured. For example, for the resource pool $u$, $L_{reserved,thresh}^{SL} = L_{bitmap}^{SL,u}$.

A resource pool may be configured to be a "transmitting resource pool", and resources therein may be used for data transmission and/or HARQ-ACK information reception in SL communication, etc.

A resource pool may also be configured to be a "receiving resource pool", and resources therein may be used for data reception and/or HARQ-ACK information transmission in SL communication, etc.

Methods for allocating resources (such as time-domain resources, or frequency-domain resources, or code-domain resources, or spatial-domain resources) related to SL operations may include:

- Mode 1 (or Resource Allocation Mode 1, or Sidelink Resource Allocation Mode 1): a base station schedules a resource for SL transmission.
- Mode 2 (or Resource Allocation Mode 2, or Sidelink Resource Allocation Mode 2): UE determines a resource for SL transmission (i.e., the base station does not participate in scheduling of any resource for SL transmission). For example, LTE performing an SL transmission operation autonomously determines a resource for SL transmission.

For an SL transmission, the transmitter may be referred to as TX UE, and the receiver may be referred to as RX UE.

One UE may correspond to (or be associated with) one or more "source layer-2 identifiers" (source layer-2 IDs or source layer-2 UE IDs) and/or one or more "destination layer-2 identifiers" (destination layer-2 IDs or destination layer-2 UE IDs), wherein

- Optionally, a source layer-2 identifier may be an integer represented by several (e.g., 24) bits.
- A destination layer-2 identifier may be an integer represented by several (e.g., 24) bits.
- Optionally, several (e.g., eight) least significant bits of a "source layer-2 identifier" may be used as a "source layer-1 identifier" (source layer-1 ID or source layer-1 UE ID). Optionally, the "source layer-1 identifier" may be indicated in layer-1 signaling, for example, indicated in SCI.
- Optionally, several (e.g., eight) least significant bits of a "destination layer-2 identifier" may be used as a "destination layer-1 identifier" (destination layer-1 ID or destination layer-1 UE ID). Optionally, the "destination layer-1 identifier" may be indicated in layer-1 signaling, for example, indicated in SCI.
- Optionally, in an SL transmission in which the UE acts as the transmitter, the "source layer-2 identifier" may be used to indicate a source layer-2 identifier of the UE.
- Optionally, in an SL unicast transmission in which the UE acts as the transmitter, the "destination layer-2 identifier" may be used to indicate a source layer-2 identifier of an expected receiver of the SL transmission.
- Optionally, in an SL groupcast transmission in which the UE acts as the transmitter, the "destination layer-2 identifier" may be used to indicate a destination layer-2 identifier corresponding to (or associated with) the groupcast transmission.
- Optionally, in an SL broadcast transmission in which the UE acts as the transmitter, the "destination layer-2 identifier" may be used to indicate a destination layer-2 identifier corresponding to (or associated with) the broadcast transmission.

- Optionally, in an SL unicast transmission that is detected by the LTE and that is from other LTE, if the "destination layer-2 identifier" indicates a source layer-2 identifier of the LTE, and the "source layer-2 identifier" indicates a destination layer-2 identifier of the UE, then it can be considered that the UE is an expected receiver of the SL transmission.
- Optionally, in an SL groupcast transmission that is detected by the LTE and that is from other UE, if the "destination layer-2 identifier" indicates a destination layer-2 identifier of the UE (for example, a destination layer-2 identifier for groupcast), then it can be considered that the UE is an expected receiver of the SL transmission.
- Optionally, in an SL broadcast transmission that is detected by the LTE and that is from other UE, if the "destination layer-2 identifier" indicates a destination layer-2 identifier of the UE (for example, a destination layer-2 identifier for broadcast), then it can be considered that the UE is an expected receiver of the SL transmission.

The UE may schedule data transmission by means of sidelink control information (SCI). The SL operations may support "two-stage SCI". 1st-stage SCI may include information such as resource reservation and/or resource assignment, so that all LTEs monitoring the SL may perform sensing with respect to a resource reservation and/or resource allocation status. 2nd-stage SCI may include other information, such as information related to HARQ feedback and the like. Hereinafter, unless otherwise specified, when mentioned individually, "SCI" may refer to the 1st-stage SCI, or the 2nd-stage SCI, or the 1st-stage SCI and the 2nd-stage SCI, where applicable.

A format of the 1st-stage SCI may be SCI format 1-A (or written as "SCI format 1_A"). The following are some examples of the information that can be included in SCI format 1-A:

- priority;
- frequency resource assignment;
- time resource assignment;
- resource reservation period;
- DMRS pattern; and
- 2nd-stage SCI format.

The maximum value (for example, denoted as $N_{res}^{max}$) of the number of assigned and/or reserved and/or indicated resources (e.g., PSCCH/PSSCH resources) in each 1st-stage SCI format may be a value configured or pre-configured by a higher layer protocol (for example, configured or pre-configured by means of a parameter *sl-MaxNumPerReserve*). The "assigned and/or reserved and/or indicated resources" may include a resource corresponding to a PSCCH corresponding to the 1st-stage SCI format and/or a corresponding PSSCH. For example, if the "frequency resource assignment" and/or the "time resource assignment" corresponds to three resources, then the first resource may be a resource corresponding to a PSCCH corresponding to the 1st-stage SCI format and/or a corresponding PSSCH (for example, referred to as "a resource corresponding to the current SL transmission"), and the other two resources may be two resources that are reserved and/or assigned by the 1st-stage SCI format and that can be used for other SL transmissions (for example, resources used for retransmission performed in a future slot in the same transport block). The size of the "frequency resource assignment" field may be related to $N_{res}^{max}$. For example, when $N_{res}^{max} = 2$, the size of the "frequency resource assignment" field is $\left\lceil \log_2(\frac{N_{subch}^{SL}(N_{subch}^{SL} + 1)}{2}) \right\rceil$ bits. As another example, when $N_{res}^{max} = 3$, the size of the "frequency resource assignment" field is $\left\lceil \log_2(\frac{N_{subChannel}^{SL}(N_{subChannel}^{SL} + 1)(2N_{subChannel}^{SL} + 1)}{6}) \right\rceil$ bits. The size of the "time resource assignment" field may be related to $N_{res}^{max}$. For example, when $N_{res}^{max} = 2$, the size of the "time resource assignment" field is five bits. As another example, when $N_{res}^{max} = 3$, the size of the "time resource assignment" field is nine bits.

A resource assigned and/or reserved and/or indicated by the 1st-stage SCI format may be aperiodic. In addition, under a certain condition (for example, if a parameter *sl-MultiReserveResource* has been configured or pre-configured), the 1st-stage SCI format may indicate, by means of a "resource reservation period" field, one of several "resource reservation periods" (or "resource reservation intervals") configured or pre-configured by a higher layer protocol parameter (e.g., *sl-ResourceReservePeriodList*) (for example, the value of the indicated resource reservation period is denoted as

$P_{rsvp}^{SL}$ ). In this case, the 1$^{st}$-stage SCI may assign and/or reserve and/or indicate a resource that recurs periodically. For example, if resources indicated by the "frequency resource assignment" and/or the "time resource assignment" in the 1$^{st}$-stage SCI include a resource in the slot $t'^{SL,u}_m$, then the resource set assigned and/or reserved and/or indicated by the 1$^{st}$-stage SCI format not only includes the resource in the slot $t'^{SL,u}_m$, but also includes resources that are in slots $t'^{SL,u}_{m+1 \times P_{rsvp}^{SL}}$, $t'^{SL,u}_{m+2 \times P_{rsvp}^{SL}}$, $\cdots$ and that correspond to the same sub-channel set. Two resources at an interval of $P_{rsvp}^{SL}$ may be used to transmit two different TBs.

A format of the 2$^{nd}$-stage SCI may be SCI format 2-A (or written as "SCI format 2_A") or SCI format 2-B (or written as "SCI format 2_B") or another SCI format. The following are some examples of the information that can be included in the SCI format 2-A and/or SCI format 2-B:

- source layer-1 identifier;
- destination layer-1 identifier;
- HARQ process ID, or HARQ process number;
- new data indicator (NDI); and
- redundancy version (RV).

The 1$^{st}$-stage SCI may be carried on a PSCCH. The 2$^{nd}$-stage SCI may be multiplexed, together with data to be transmitted, on a PSSCH associated with (or scheduled by) the PSCCH. The PSCCH and the PSSCH associated therewith may be multiplexed, in a certain manner, on the time-domain resource and/or the frequency-domain resource allocated for SL transmission (for example, a sub-channel where the starting resource block of the PSCCH is located may be the starting sub-channel of the PSSCH associated therewith. As another example, the starting resource block of the PSCCH may be the starting resource block of the starting sub-channel of the PSSCH associated therewith). In addition, it may be considered that the 1$^{st}$-stage SCI and/or the corresponding 2$^{nd}$-stage SCI schedules the corresponding PSSCH (or schedules transmission of the PSSCH, or schedules transmission of a TB carried on the PSSCH).

If HARQ feedback is enabled, the RX LTE may feed back information (e.g., referred to as "HARQ-ACK information") related to PSCCH and/or PSSCH reception by means of a PSFCH. For example, when the RX UE receives a PSSCH in a resource pool, and the value of an "HARQ feedback enabled/disabled indicator" field in the corresponding SCI is 1, the RX UE provides HARQ-ACK information by means of PSFCH transmission in the resource pool. Such HARQ-ACK information may be referred to as "HARQ-ACK information reported on the SL and related to the SL transmission". In some configurations, the HARQ-ACK information reported on the SL and related to the SL transmission may indicate a positive acknowledgement (ACK or acknowledgement) indicating, for example, that data carried by a corresponding PSCCH and/or PSSCH can be correctly decoded, or may indicate a negative acknowledgement (NACK or NAK) indicating, for example, that data carried by a corresponding PSCCH and/or PSSCH cannot be correctly decoded. In some other configurations, the HARQ-ACK information reported on the SL and related to the SL transmission may indicate only NACK (for example, no HARQ-ACK feedback is transmitted when data carried by a corresponding PSCCH and/or PSSCH can be correctly decoded, whereas NACK is transmitted when data carried by a corresponding PSCCH and/or PSSCH cannot be correctly decoded). "ACK" and "NACK" may be referred to as HARQ-ACK values.

A RX UE, when performing SL reception, may receive only PSCCH and/or PSSCH transmission meeting an SL reception condition. The SL reception condition may include one or more of the following:

- The combination of a source layer-1 identifier and/or a destination layer-1 identifier and/or a cast type (e.g., unicast, groupcast, or broadcast) determined according to SCI is consistent with one combination (e.g., one of one or more combinations) of a source layer-1 identifier and/or a destination layer-1 identifier and/or a cast type allowed for reception in the RX UE.
- A source layer-2 identifier and/or a destination layer-2 identifier and/or a cast type determined according to SCI and/or a corresponding MAC PDU subheader is consistent with one combination (e.g., one of one or more combinations) of a source layer-2 identifier and/or a destination layer-2 identifier and/or a cast type allowed for reception in the RX UE.

In the time domain, PSFCH resources may recur periodically in a resource pool. For example, a corresponding period (referred to as, for example, "PSFCH period" or "PSFCH resource period," e.g., denoted as $N_{PSSCH}^{PSFCH}$, and in units of, for example, the number of slots) may be configured by means of a parameter *periodPSFCHresource* (or a parameter *sl-PSFCH-Period*), and configured to be, for example, $N_{\text{PSSCH}}^{\text{PSFCH}} = 0$ , or $N_{\text{PSSCH}}^{\text{PSFCH}} = 1$ , or $N_{\text{PSSCH}}^{\text{PSFCH}} = 2$ , or $N_{\text{PSSCH}}^{\text{PSFCH}} = 4$ ). $N_{\text{PSSCH}}^{\text{PSFCH}} = 0$ may be used to indicate that no PSFCH resource is configured in a corresponding resource pool. For example, if a resource pool is not configured with any PSFCH-related parameter (such as a parameter *sl-PSFCH-Config,* or one or more parameters in the parameter *sl-PSFCH-Config),* or if the PSFCH period configured in the parameter *sl-PSFCH-Config* is 0, then it is indicated that the resource pool is not configured with any PSFCH resource. As another example, if a resource pool is configured with the parameter *sl-PSFCH-Config,* and if the value of the PSFCH period configured in the parameter *sl-PSFCH-Config* is not 0, then it is indicated that the resource pool is configured with a PSFCH resource.

A slot configured with a PSFCH resource may be referred to as "PSFCH slot". Within one PSFCH slot, symbols related to PSFCH transmission may be the last one or more SL symbols of the slot. For example, for PSFCH format 0, the symbol $l_{start}^{SL} + N_{length}^{SL} - 1$ may be used as a gap symbol, or a guard symbol, and the symbol $l_{start}^{SL} + N_{length}^{SL} - 2$ may be used for PSFCH transmission. Content transmitted on the symbol $l_{start}^{SL} + N_{length}^{SL} - 2$ may be copied to the symbol $l_{start}^{SL} + N_{length}^{SL} - 3$ (or, the symbol $l_{start}^{SL} + N_{length}^{SL} - 2$ and the symbol $l_{start}^{SL} + N_{length}^{SL} - 3$ are both used for PSFCH transmission). For UE that receives a PSFCH, the symbol $l_{start}^{SL} + N_{length}^{SL} - 3$ may be used for automatic gain control (AGC). Other SL symbols in one PSFCH slot may be used to transmit other SL signals/channels, such as a PSCCH, a PSSCH, etc.

In SL resource allocation mode 2, allocated SL resources may be determined by using one or more methods. For example, a set of "available resources" (or "idle resources") may be determined by using different methods, and then one or more SL resources for SL transmission are selected (e.g., randomly selected) from the set of "available resources" (or "idle resources"). In embodiments and implementations of the present invention, a method for determining a set of "available resources" may be referred to as "resource selection mechanism" or "resource selection method" or "resource selection scheme" or "resource determination mechanism" or "resource determination method" or "resource determination scheme" or "resource allocation mechanism" or "resource allocation method" or "resource allocation scheme" or the above names added with the prefix "SL" (such as "SL resource selection mechanism"), or the like. Alternatively, a set of all operations for determining allocated SL resources is referred to as "resource selection mechanism". Alternatively, a set of some operations for determining allocated SL resources is referred to as "resource selection mechanism".

If a UE uses a certain resource selection mechanism in SL resource allocation mode 2, the UE may be referred to as implementing, on the basis of the resource selection mechanism, SL resource allocation mode 2.

Operations corresponding to SL resource allocation mode 2 may include: in a slot *n,* requesting, by a higher layer protocol entity (e.g., a MAC layer protocol entity), a physical layer protocol entity to determine, according to an input parameter set (e.g., denoted as $P_A$), a resource subset (e.g., denoted as $S_A$) from which resource(s) may be selected, and reporting, by the physical layer protocol entity, the resource subset $S_A$ to the higher layer protocol entity (e.g., the MAC layer protocol entity).

The input parameter set $P_A$ may include one or more of the following:

- A resource pool (e.g., denoted as $u_{sel}$) for performing resource selection. For example, the resource subset $S_A$ may be a subset of a set of candidate resources in the resource pool $u_{sel}$.
- A priority (e.g., a layer-1 priority, or a physical layer priority, e.g., denoted as $prio_{TX}$).
- A remaining packet delay budget.
- A resource size. For example, the "resource size" may include the number of sub-channels occupied by each resource (e.g., the number of consecutive sub-channels), e.g., denoted as $L_{subCH}$. As another example, the "resource size" may include the number of slots occupied by each resource (e.g., the number of consecutive slots), e.g., denoted as $L_{slot}$. Optionally, $L_{subCH}$ and/or $L_{slot}$ may be a predefined or configured or pre-configured value, e.g., $L_{slot} = 1$ (in this case, the resource may be referred to as a single-slot resource).
- A resource reservation interval, e.g., denoted as $P_{rsvp\_TX}$.
- A resource set for a re-evaluation operation, e.g., denoted as $(r_0, r_1, r_2, ...)$.
- A resource set for a pre-emption operation, e.g., denoted as $(r'_0, r'_1, r'_2, ...)$.

To determine the resource subset $S_A$, the set $S_A$ may be initialized to be a set (e.g., denoted as $S_{all}$) consisting

of all candidate resources, and then unavailable resources (e.g., resources reserved by other UEs) are removed from the set $S_4$, and the resulting set $S_A$ is the requested resource subset.

The "set $S_{all}$ consisting of all candidate resources" may be a set of all resources corresponding to $L_{subCH}$ sub-channels and $L_{slot}$ slots in the resource pool $u_{sel}$ and in a resource selection window (e.g., a time window corresponding to a time interval $[n + T_1, n + T_2]$), or a subset of the set (e.g., including only resources in a slot that can be used to transmit a PSCCH and/or a PSSCH, wherein, for example, in an SL symbol set configured in a certain slot in the resource pool $u_{sel}$, if the number of SL symbols that can be used to transmit a PSCCH and/or a PSSCH does not correspond to any PSSCH DMRS mode, then the slot cannot be used to transmit a PSCCH and/or a PSSCH, so that a resource in the slot may not belong to the set $S_{all}$). $T_1$ and $T_2$ may be two values determined by the UE and meeting a certain condition. For example, $T_1$ may be related to processing capabilities of the UE, and $T_2$ may be related to the remaining packet delay budget.

For a UE that applies SL resource allocation mode 2, the "unavailable resources" removed from the set $S_A$ may include one or more of the following:

- A resource that cannot be used to perform SL transmission thereon due to the transmission capability limitations of the LTE. For example, due to the limitations on the number of simultaneous transmissions supported by the LTE, the LTE cannot perform SL transmission on an SL carrier corresponding to the set $S_A$ when the UE is performing transmission on another carrier. As another example, due to the limitations on carrier combinations supported by the LTE, the LTE cannot perform SL transmission on an SL carrier corresponding to the set $S_A$ when the LTE is performing transmission on another carrier. As another example, because a requirement on the time required for tuning to a certain resource in the set $S_4$ exceeds the capability of the UE, the UE cannot perform SL transmission on the resource.

- An unavailable resource identified by the LTE by means of a sensing operation. For example, resource reservation information (e.g., resource reservation information in SCI) transmitted on an SL (e.g., transmitted by another LTE) is monitored, detected, or received, so as to determine a set of reserved resources, and/or a set of resources that cannot be determined as reserved or not reserved, and/or a set of resources that may result in a collision, and/or a set of allocated resources, and/or a set of resources that cannot be used for allocation, etc.

- An unavailable resource indicated by another UE or a base station. For example, another UE monitors, detects, or receives resource reservation information (e.g., resource reservation information in SCI) transmitted on an SL, so as to determine a set of reserved resources, and/or a set of resources that cannot be determined as reserved or not reserved, and/or a set of resources that may result in a collision, and/or a set of allocated resources, and/or a set of resources that cannot be used for allocation, and/or a set of resources that are not preferentially allocated, etc. The other UE may indicate information related to these resources to the UE via signaling carried in the SL transmission.

The operations corresponding to SL resource allocation mode 2 may include: selecting, from the resource subset $S_A$, a resource for a PSSCH/PSCCH transmission (e.g., a PSSCH transmission, or a PSCCH transmission, or a PSSCH transmission and a PSCCH transmission multiplexed in the same resource).

The operations corresponding to SL resource allocation mode 2 may include: selecting, from the resource subset $S_A$, resources for a plurality of PSSCH/PSCCH transmissions.

The operations corresponding to SL resource allocation mode 2 may include: selecting, from the resource subset $S_A$, a transmission resource for a transport block, for example, selecting, from the resource subset $S_A$, a resource for an initial transmission of the transport block and each retransmission thereof.

The operations corresponding to SL resource allocation mode 2 may include: selecting, from the resource subset $S_A$, transmission resources for a plurality of transport blocks, for example, selecting, from the resource subset $S_A$, a resource for an initial transmission of each of the plurality of transport blocks and each retransmission thereof.

In SL resource allocation mode 2, a "random selection" method may be used to select a resource from the resource subset $S_A$. For example, a resource is selected from the resource subset $S_A$ according to an equal probability method.

If a resource selection mechanism identifies an unavailable resource by means of a sensing operation, it can be considered that the resource selection mechanism is a "sensing-based resource selection mechanism". The sensing operation may be "full sensing" (or simply "sensing"). For example, the UE must monitor all slots that are in a sensing window (e.g., a time window corresponding to a time interval $[n - T_0, n - T_{proc,0}^{SL})$ and/or a time window defined in another manner) and belong to (or may belong to) the resource pool $u_{sel}$ except the slots that cannot be monitored due to some exceptional circumstances (e.g., the slots that cannot be monitored during SL transmission due to half-duplex limitations) and/or some special slots (e.g., slots that cannot be used to transmit a PSCCH and/or a PSSCH). $T_0$ may

be configured by means of a higher-layer parameter (e.g., the parameter *sl-SensingWindow*), and $T_{proc,0}^{SL}$ may be related to the processing capability of the UE. The corresponding resource selection mechanism may be referred to as "full sensing-based resource selection mechanism", or "full sensing-based resource selection", or simply "full sensing", or simply, if no confusion will be caused, "sensing-based resource selection mechanism", or "sensing-based resource selection", or simply "sensing".

The sensing operation may also be "partial sensing". For example, the LTE only needs to monitor some slots (e.g., some slots that recur periodically) that are in the sensing window and belong to (or may belong to) the resource pool $u_{sel}$. The corresponding resource selection mechanism may be referred to as "partial sensing-based resource selection mechanism", or "partial sensing-based resource selection", or simply "partial sensing".

If a resource selection mechanism does not involve (or, does not perform) any sensing operation, it can be considered that the resource selection mechanism is "resource selection mechanism not based on sensing". For example, the set $S_4$ may be equal to the "set $S_{all}$ consisting of all candidate resources", or may be equal to a set acquired by removing some special sources from the "set $S_{all}$ consisting of all candidate resources". The special resources may include one or more of the following:

- A resource in a slot that cannot be used to perform PSCCH/PSSCH transmission.
- A resource that cannot be used to perform SL transmission thereon due to the transmission capability limitations of the UE.
- An unavailable resource indicated by another UE or a base station.

The corresponding resource selection mechanism may be referred to as "random resource selection", or simply "random selection", or "random resource selection not based on sensing".

In addition, there may also be "sensing-based random resource selection". For example, in a sensing-based resource selection mechanism, if a sensing result cannot be applied due to a certain reason, or only part of a sensing result is applied, then the resource selection can be considered "sensing-based random resource selection".

Different UEs may support different sets of resource selection mechanisms. For example, all LTEs support "random resource selection". As another example, some LTEs support only "full sensing" and "random resource selection". As another example, some LTEs support only "partial sensing" and "random resource selection". As another example, some LTEs support "full sensing", "partial sensing", and "random resource selection". The set of resource selection mechanisms supported by the UE may be denoted as $M_{cap}$.

In various SL resource selection mechanisms, it can be considered that "full sensing" consumes a relatively large amount of power (or energy), and is more suitable for LTEs not sensitive to power consumption (e.g., a UE mounted on an automobile in V2V communication), and "partial sensing", "random resource selection", etc. consume a relatively small amount of power, and are more suitable for LTEs sensitive to power consumption and/or communication scenarios sensitive to power consumption (e.g., a handheld device corresponding to "pedestrian" in V2P communication). In another aspect, "random resource selection" may be used as an exception addressing mechanism, or a fallback mechanism for another resource selection mechanism (e.g., "full sensing") (e.g., in V2V communication, when no sensing result is temporarily available, fallback from "full sensing" to "random resource selection" may be performed). Hence, "random resource selection" may also be applied to UEs not sensitive to power consumption. Certainly, the disadvantage of SL resource selection mechanisms such as "partial sensing", "random resource selection", etc., is that the probability of collisions between resources selected by different UEs is increased.

The SL resource selection mechanisms such as "partial sensing", "random resource selection", etc., may be applied to SL communication as part of "SL power saving" characteristics. For example, "partial sensing" can only be used when "SL power saving" is enabled (or activated, or configured), and the like.

When "SL power saving" is enabled, the UE may be in one of a plurality of states (e.g., referred to as SL states, or SL modes, or SL communication methods, or the like) related to "SL power saving", such as:

- First SL state. For example, the first SL state may be an "SL non-power saving state". For example, a LTE in this SL state is not sensitive to power (or energy) consumption, and correspondingly, the used resource selection mechanism does not require particularly taking into consideration power (or energy) consumption. The first SL state may also be referred to as "first SL mode", or "first SL communication method", etc. The SL non-power saving state may also be referred to as "SL non-power saving mode", or "SL non-power saving communication method", etc. An example of the SL non-power saving communication method may be some specific V2X communication methods (e.g., V2V).
- Second SL state. The second SL state may be an "SL power saving state". For example, a UE in this SL state is relatively or extremely sensitive to power (or energy) consumption, and correspondingly, the used resource selection mechanism requires taking into consideration power (or energy) consumption. For example, use of a resource selection mechanism that has high power consumption is avoided or reduced. The second SL state may also be referred to as "second SL mode", or "second SL communication method", etc. The SL power saving state may also be referred to as "SL power saving mode", or "SL power saving communication method", etc. An example of the SL power saving communication method may be some specific V2X communication methods (e.g., V2P). Another example of the SL power saving communication method may be an SL communication method used for public security.

"SL power saving" may be enabled (or "activated", or "configured") or disabled (or deactivated) by means of a higher layer protocol parameter (e.g., referred to as *sl-powerSavingConfig*). For example, if the parameter *sl-powerSavingConfig* is not present (or not configured), it is indicated that "SL power saving" is not enabled or is disabled. As another example, if the parameter *sl-powerSavingConfig* is present (or configured), it is indicated that "SL power saving" is enabled. As another example, if the value of the parameter *sl-powerSavingConfig* (or a certain parameter in an information element corresponding to the parameter *sl-powerSavingConfig*) is a predefined value (e.g., "disabled", "false", or the like), it is indicated that "SL power saving" is not enabled or is disabled. As another example, if the value of the parameter *sl-powerSavingConfig* (or a certain parameter in an information element corresponding to the parameter *sl-powerSavingConfig*) is a predefined value (e.g., "enabled", "true", or the like), it is indicated that "SL power saving" is enabled.

If "SL power saving" is not enabled, the UE may be considered to be always in the first SL state.

The set $M_{cap}$ of resource selection mechanisms supported by the UE may be related to the SL state that the LTE is in. For example, if the LTE is in the first SL state, the set $M_{cap}$ is equal to a set $M_{cap,1}$. As another example, if the UE is in the second SL state, the set $M_{cap}$ is equal to a set $M_{cap,2}$. Optionally, the set $M_{cap,1}$ and the set $M_{cap,2}$ may be the same or different. For example, the set $M_{cap,1}$ is {full sensing}. As another example, the set $M_{cap,1}$ is {full sensing, random resource selection}. As another example, the set $M_{cap,1}$ is {full sensing, partial sensing, random resource selection}. As another example, the set $M_{cap,2}$ may be {random resource selection}. As another example, the set $M_{cap,2}$ may be {partial sensing, random resource selection}.

An inter-LTE coordination function can be supported in SL communication, and used for, for example, coordination in resource (e.g., SL resources) allocation and/or reservation and/or indication between two or more LTEs. Specifically, for example, a LTE (e.g., referred to as LTE A) may transmit an "inter-UE coordination message" to one or more other UEs (for example, collectively referred to as UE B). The "inter-LTE coordination message" may indicate one (or more) resource sets.

Each resource indicated in an inter-LTE coordination message transmitted from LTE A to LTE B may correspond to a "resource type" (or "resource state", or "resource feature", or "resource use"), such as one of the following:

- "Reserved resource" (or "resource being reserved", or "resource to be reserved", or "resource for reservation", or "allocated resource", or "resource being allocated", or "resource to be allocated", or "resource for allocation"). For example, the resource has been reserved (or allocated) by UE A. Specifically, the resource may be reserved by UE A for a particular UE, for example, UE A itself, and as another example, UE B.
- "Released resource" (or "resource being released", or "resource to be released", or "resource for release"). For example, UE A expects to release a resource reserved thereby in previously transmitted SCI. A cause of releasing the resource may be that the resource is selected for one (e.g., the last one) of several retransmissions of a TB, but LTE A has received an acknowledgement of the TB before the slot corresponding to the resource arrives).
- "Colliding resource". For example, UE A detects a resource reservation collision in a slot and/or one or more sub-channels where the resource is located. Optionally, the "collision" may be a collision in a slot that has elapsed, and corresponding collision detection may be referred to as "post-collision detection". Optionally, the "collision" may be a collision in a future slot (or referred to as a "potential collision"), and corresponding collision detection may be referred to as "pre-collision detection".
- "Preferred resource". For example, UE A expects that UE B selects (or, preferentially selects) the resource during resource selection (for example, when LTE B performs SL transmission to LTE A).
- "Non-preferred resource". For example, LTE A expects that LTE B excludes (or, preferentially excludes) the resource during resource selection (for example, when UE B performs SL transmission to UE A).

An inter-LTE coordination message may be triggered autonomously by a UE transmitting the inter-UE coordination message. For example, if UE A detects that resources respectively indicated (or reserved, or allocated) by UE B1 and UE B2 collide with each other, then UE A may transmit an inter-UE coordination message to indicate the colliding resources. The inter-UE coordination message may be transmitted in a broadcast or groupcast manner, or is respectively transmitted to UE B1 and UE B2 in a unicast manner.

An inter-LTE coordination message may be triggered by an "inter-LTE coordination request message" transmitted by one or more other LTEs. In this case, the inter-LTE coordination message may also be referred to as an "inter-UE coordination response message". For example, LTE B transmits an "inter-LTE coordination request message" to LTE A, and LTE A transmits an "inter-UE coordination response message" to UE B as a response.

An inter-UE coordination message may be a physical layer message. For example, the inter-UE coordination message may be included in SCI (e.g., 1st-stage SCI, or 2nd-stage SCI). As another example, the inter-LTE coordination message may be multiplexed in a PSSCH (for example, the inter-UE coordination message and 2nd-stage SCI and/or an SL-SCH may be multiplexed in the same PSSCH transmission). As another example, the inter-LTE coordination message may be multiplexed in a PSCCH (for example, the inter-UE coordination message and 1st-stage SCI may be multiplexed in the same PSCCH transmission).

An inter-UE coordination message may be a higher layer (e.g., the MAC layer, or the RRC layer) message. For example, the inter-UE coordination message may be carried in a MAC CE. As another example, the inter-UE coordination message may be an RRC message.

An inter-LTE coordination request message may be a physical layer message. For example, the inter-UE coordination request message may be included in SCI (e.g., 1st-stage SCI, or 2nd-stage SCI). As another example, the inter-UE coordination request message may be multiplexed in a PSSCH (for example, the inter-UE coordination request message and 2nd-stage SCI and/or an SL-SCH may be multiplexed in the same PSSCH transmission). As another example, the inter-LTE coordination request message may be multiplexed in a PSCCH (for example, the inter-UE coordination request message and 1st-stage SCI may be multiplexed in the same PSCCH transmission).

An inter-LTE coordination request message may be a higher layer (e.g., the MAC layer, or the RRC layer) message. For example, the inter-UE coordination request message may be carried in a MAC CE. As another example, the inter-UE coordination request message may be an RRC message.

A coordination resource indicated in an inter-UE coordination message may be determined by means of one or more SCIs detected on an SL (e.g., one or more SCIs detected in operations such as "sensing"). For example, it is determined according to a plurality of SCIs that a resource has been reserved by a plurality of other UEs. As another example, it is determined according to a plurality of SCIs that resources reserved by a plurality of other UEs overlap with each other (e.g., overlapping on one or more UEs).

The inter-LTE coordination function may be activated (or "enabled", or "configured") or deactivated (or disabled) by means of a higher layer protocol parameter (e.g., referred to as *sl-ueCoordConfig*). For example, if the parameter *sl-ueCoordConfig* is not present (or not configured), it is indicated that the inter-UE coordination function is not activated. As another example, if the parameter *sl-ueCoordConfig* is present (or configured), it is indicated that the inter-UE coordination function is activated. As another example, if the value of the parameter *sl-ueCoordConfig* (or a certain parameter in an information element corresponding to the parameter *sl-ueCoordConfig*) is a predefined value (e.g., "disabled", "false", or the like), it is indicated that the inter-UE coordination function is not activated. As another example, if the value of the parameter *sl-ueCoordConfig* (or a certain parameter in an information element corresponding to the parameter *sl-ueCoordConfig*) is a predefined value (e.g., "enabled", "true", or the like), it is indicated that the inter-UE coordination function is activated.

[Embodiment 1]

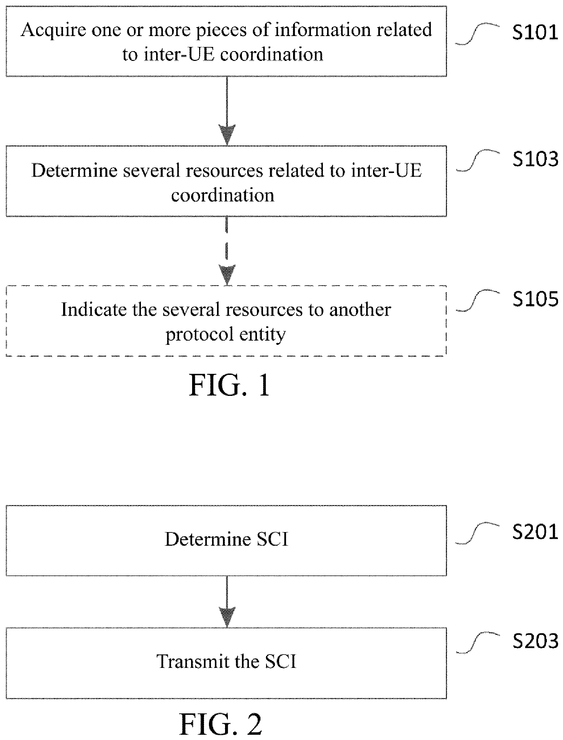

A method performed by user equipment according to Embodiment 1 of the present invention will be described below with reference to FIG. 1.

FIG. 1 is a flowchart showing a method performed by user equipment according to Embodiment 1 of the present invention.

As shown in FIG. 1, in Embodiment 1 of the present invention, the steps performed by the user equipment (UE) include: step S101 and step S103. Optionally, the method may further include step S105 (the dashed line indicates "optional" in FIG. 1).

Specifically, in step S101, one or more pieces of information related to inter-UE coordination is acquired.

Optionally, part or all of the "one or more pieces of information related to inter-UE coordination" is indicated by a first protocol layer entity of the UE (e.g., indicated by the first protocol layer entity of the UE to a second protocol layer entity of the UE performing step S101), for example, when Embodiment 1 of the present invention is triggered, and as another example, when step S101 is triggered.

Optionally, part or all of the "one or more pieces of information related to inter-UE coordination" is predefined information.

Optionally, part or all of the "one or more pieces of information related to inter-UE coordination" is configuration information of a higher layer protocol.

Optionally, part or all of the "one or more pieces of information related to inter-UE coordination" is pre-configuration information of a higher layer protocol.

Optionally, the "one or more pieces of information related to inter-LTE coordination" includes "resource type" indication information (e.g., denoted as $C_{res,set}^{SL,in}$ ), wherein

- Optionally, $C_{res,set}^{SL,in}$ may indicate one or more of the following:

   ♦ A reserved resource.
   ♦ A released resource.
   ♦ A colliding resource.
   ♦ A preferred resource.
   ♦ A non-preferred resource.

   For example, the number of different resource types indicated by $C_{res,set}^{SL,in}$ is denoted as $N_{res,set}^{SL,in}$ .

- Optionally, $C_{res,set}^{SL,in}$ may be indicated by the first protocol layer entity to the second protocol layer entity.
- Optionally, $C_{res,set}^{SL,in}$ may be an input parameter for triggering Embodiment 1 of the present invention (or triggering step S101).
- Optionally, $C_{res,set}^{SL,in}$ may be a predefined or configured or pre-configured value. Optionally, the "one or more pieces of information related to inter-LTE coordination" includes configuration information related to a first time window (for example, denoted as a time interval $[t_{sci,start}^{SL,in}, t_{sci,end}^{SL,in}]$ , where $t_{sci,start}^{SL,in}$ and $t_{sci,end}^{SL,in}$ may be represented by slot indexes, or represented in another manner), wherein
- Optionally, the first time window may be referred to as a "sensing window".
- Optionally, the start time of the first time window is related to the time of triggering Embodiment 1 of the present invention (or triggering step S101).
- Optionally, the start time of the first time window is related to one or more input parameters for triggering Embodiment 1 of the present invention (or triggering step S101).
- Optionally, the length of the first time window is related to one or more predefined or configured or pre-configured parameters.
- Optionally, the length of the first time window is related to one or more input parameters for triggering Embodiment 1 of the present invention (or triggering step S101).

Optionally, the "one or more pieces of information related to inter-LTE coordination" includes configuration information related to a second time window (for example, denoted as a time interval $[t_{res,start}^{SL,in}, t_{res,end}^{SL,in}]$ , where $t_{res,start}^{SL,in}$ and $t_{res,end}^{SL,in}$ may be represented by slot indexes, or represented in another manner), wherein

- Optionally, the second time window may be referred to as a "coordination window" or a "coordination resource window".
- Optionally, the start time of the second time window is related to the time of triggering Embodiment 1 of the present invention (or triggering step S101).
- Optionally, the start time of the second time window is related to one or more input parameters for triggering Embodiment 1 of the present invention (or triggering step S101).
- Optionally, the length of the second time window is related to one or more predefined or configured or pre-configured parameters.
- Optionally, the length of the second time window is related to one or more input parameters for triggering Embodiment 1 of the present invention (or triggering step S101).

Optionally, the "one or more pieces of information related to inter-LTE coordination" includes $N_{ID}$ identifiers (for example, denoted as an identifier set $E_{in}^{SL} = \{e_0^{SL,in}, e_1^{SL,in}, \ldots, e_{N_{ID}-1}^{SL,in}\}$ ), wherein

- Optionally, the set $E_{in}^{SL}$ may be a source layer-1 identifier set.
- Optionally, the set $E_{in}^{SL}$ may be a source layer-2 identifier set.

- Optionally, the set $E_{in}^{SL}$ may be a destination layer-1 identifier set.

- Optionally, the set $E_{in}^{SL}$ may be a destination layer-2 identifier set.

- Optionally, $N_{ID}$ may be an integer greater than or equal to one.

- Optionally, the set $E_{in}^{SL}$ may be indicated by the first protocol layer entity to the second protocol layer entity.

- Optionally, the set $E_{in}^{SL}$ may be an input parameter for triggering Embodiment 1 of the present invention (or triggering step S101).

- Optionally, the set $E_{in}^{SL}$ may be a predefined or configured or pre-configured set.

Optionally, the "one or more pieces of information related to inter-LTE coordination" includes information about $N_{LINK}$ SL "connections" (links) (for example, denoted as an SL connection set $L_{in}^{SL} = \{l_0^{SL,in}, l_1^{SL,in}, \dots, l_{N_{LINK}-1}^{SL,in}\}$ ), wherein

- Optionally, $l_k^{SL,in}$ $(0 \le k < N_{LINK})$ may correspond to one or more of the following (or, may consist of one or more of the following):

  ♦ A "destination ID".
  ♦ A "source ID".
  ♦ A "cast type".
  wherein
  ♦ When $k$ is different, a combination of the "destination ID" and/or the "source ID" and/or the "cast type" corresponding to corresponding $l_k^{SL,in}$ may be different. For example, $l_{k_1}^{SL,in}$ corresponds to the "destination ID", and $l_{k_2}^{SL,in}$ corresponds to the "destination ID" and the "source ID".
  ♦ Optionally, the "source ID" may be a source layer-1 identifier.
  ♦ Optionally, the "source ID" may be a source layer-2 identifier.
  ♦ Optionally, the "destination ID" may be a destination layer-1 identifier.
  ♦ Optionally, the "destination ID" may be a destination layer-2 identifier.
  ♦ Optionally, the "cast type" may be unicast, or groupcast, or broadcast.
  ♦ Optionally, for unicast, $l_k^{SL,in}$ corresponds to the "destination ID", the "source ID", and the "cast type".
  ♦ Optionally, for groupcast, $l_k^{SL,in}$ corresponds to the "destination ID" and the "cast type".
  ♦ Optionally, for broadcast, $l_k^{SL,in}$ corresponds to the "destination ID" and the "cast type".
  ♦ Optionally, for unicast, $l_k^{SL,in}$ corresponds to the "destination ID" and the "source ID".
  ♦ Optionally, for groupcast, $l_k^{SL,in}$ corresponds to the "destination ID".
  ♦ Optionally, for broadcast, $l_k^{SL,in}$ corresponds to the "destination ID".
  ♦ Optionally, if the "cast type" is unicast, $l_k^{SL,in}$ corresponds to the "destination ID" and the "source ID".
  ♦ Optionally, if the "cast type" is groupcast, $l_k^{SL,in}$ corresponds to the "destination ID".
  ♦ Optionally, if the "cast type" is broadcast, $l_k^{SL,in}$ corresponds to the "destination ID".

- Optionally, $N_{LINK}$ may be an integer greater than or equal to one.

- Optionally, the set $L_{in}^{SL}$ may be indicated by the first protocol layer entity to the second protocol layer entity.

- Optionally, the set $L_{in}^{SL}$ may be an input parameter for triggering Embodiment 1 of the present invention (or triggering step S101).

- Optionally, the set $L_{in}^{SL}$ may be a predefined or configured or pre-configured set.

Optionally, the "one or more pieces of information related to inter-LTE coordination" includes configuration information of $N_{pool}$ resource pools (for example, denoted as a resource pool set $U = \{u_0, u_1, \ldots, u_{NpooL}-1\}$). A slot set of a resource pool $u_i$ ($0 \leq i < N_{pool}$) is denoted as $T_{u_i}^{SL} = \{t'^{SL,u_i}_0, t'^{SL,u_i}_1, \ldots, t'^{SL,u_i}_{T'^{u_i}_{max}-1}\}$, where $T'^{u_i}_{max}$ is the number of elements in the set $T_{u_i}^{SL}$.

Optionally, the resource pool set $U$ (or a subset of the resource pool set $U$) may be indicated by the first protocol layer entity to the second protocol layer entity.

Optionally, the resource pool set $U$ (or a subset of the resource pool set $U$) may be an input parameter for triggering Embodiment 1 of the present invention (or triggering step S101).

Optionally, the resource pool set $U$ (or a subset of the resource pool set $U$) may be a predefined or configured or pre-configured set.

Optionally, the resource pool set $U$ is equal to a union of a set (for example, denoted as $U_{TX}$) consisting of $N_{TX,pool}$ transmitting resource pools (or TX resource pools, or TX pools) and a set (for example, denoted as $U_{RX}$) consisting of $N_{RX,pool}$ receiving resource pools (or RX resource pools, or RX pools), wherein

- Optionally, an intersection of the set $U_{TX}$ and the set $U_{RX}$ is an empty set.
- Optionally, an intersection of the set $U_{TX}$ and the set $U_{RX}$ is a nonempty set.
- Optionally, $N_{TXpool}$ may be an integer greater than or equal to zero.
- Optionally, $N_{TX,pool}$ may be an integer greater than or equal to one.
- Optionally, the set $U_{TX}$ (or a subset of the set $U_{TX}$) may be indicated by the first protocol layer entity to the second protocol layer entity.
- Optionally, the set $U_{TX}$ (or a subset of the set $U_{TX}$) may be an input parameter for triggering Embodiment 1 of the present invention (or triggering step S101).
- Optionally, the set $U_{TX}$ (or a subset of the set $U_{TX}$) may be a predefined or configured or pre-configured set.
- Optionally, $N_{RX,pool}$ may be an integer greater than or equal to zero.
- Optionally, $N_{RX,pool}$ may be an integer greater than or equal to one.
- Optionally, the set $U_{RX}$ (or a subset of the set $U_{RX}$) may be indicated by the first protocol layer entity to the second protocol layer entity.
- Optionally, the set $U_{RX}$ (or a subset of the set $U_{RX}$) may be an input parameter for triggering Embodiment 1 of the present invention (or triggering step S101).
- Optionally, the set $U_{RX}$ (or a subset of the set $U_{RX}$) may be a predefined or configured or pre-configured set.

Optionally, the "one or more pieces of information related to inter-LTE coordination" includes $N_{slot}$ slots (for example, denoted as a slot set $T_{in}^{SL} = \{t_{y_{(0)}}^{SL,in}, t_{y_{(1)}}^{SL,in}, \ldots, t_{y_{(N_{slot}-1)}}^{SL,in}\}$). wherein

- Optionally, the $N_{slot}$ slots may belong to a slot set $T_u^{SL} = \{t'^{SL,u}_0, t'^{SL,u}_1, \ldots, t'^{SL,u}_{T'^u_{max}-1}\}$ of a resource pool (for example, denoted as $u$).
- Optionally, the $N_{slot}$ slots may belong to the "SL slot" set $T_{all}^{SL} = \{t_0^{SL}, t_1^{SL}, \cdots, t_{T_{max}-1}^{SL}\}$.
- Optionally, the $N_{slot}$ slots may belong to a set $T_{all} = \{0, 1, \cdots, 10240 \times 2^{\mu SL} - 1\}$ of all the slots.

Optionally, the set $T_{in}^{SL}$ (or a subset of the set $T_{in}^{SL}$) may be indicated by the first protocol layer entity to the second protocol layer entity.

Optionally, the set $T_{in}^{SL}$ (or a subset of the set $T_{in}^{SL}$) may be an input parameter for triggering Embodiment 1 of the present invention (or triggering step S101).

Optionally, the set $T_{in}^{SL}$ (or a subset of the set $T_{in}^{SL}$) may be a predefined or configured or pre-configured set.

Optionally, the "one or more pieces of information related to inter-LTE coordination" includes information indicated in $N_{SCI}$ SCIs (for example, denoted as an SCI set $SCI_{in}^{SL} = \{SCI_0^{SL,in}, SCI_1^{SL,in}, \ldots, SCI_{N_{SCI}-1}^{SL,in}\}$ ), wherein

- Optionally, for one or more (for example, all) integers $n_1$ satisfying $0 \le n_1 < N_{SCI}$, $SCI_{n_1}^{SL,in}$ is SCI transmitted in the $N_{pool}$ resource pools.

- Optionally, for one or more (for example, all) integers $n_1$ satisfying $0 \le n_1 < N_{SCI}$, $SCI_{n_1}^{SL,in}$ is SCI transmitted in the $N_{TX,pool}$ transmitting resource pools.

- Optionally, for one or more (for example, all) integers $n_1$ satisfying $0 \le n_1 < N_{SCI}$, $SCI_{n_1}^{SL,in}$ is SCI transmitted in the $N_{RX,pool}$ receiving resource pools.

- Optionally, for one or more (for example, all) integers $n_1$ satisfying $0 \le n_1 < N_{SCI}$, $SCI_{n_1}^{SL,in}$ is SCI transmitted in the first time window $[t_{sci,start}^{SL,in}, t_{sci,end}^{SL,in}]$ .

- Optionally, for one or more (for example, all) integers $n_1$ satisfying $0 \le n_1 < N_{SCI}$, $SCI_{n_1}^{SL,in}$ is SCI detected (or received) by the UE (for example, SCI transmitted by another UE).

- Optionally, for one or more (for example, all) integers $n_1$ satisfying $0 \le n_1 < N_{SCI}$, $SCI_{n_1}^{SL,in}$ is SCI transmitted by the UE.

In addition, in step S103, several resources related to inter-UE coordination are determined. For example, the number of the resources related to inter-LTE coordination is denoted as $N_{co}^{SL}$ , and a resource set corresponding to the $N_{co}^{SL}$ resources is denoted as $R_{co}^{SL} = \{r_0^{SL,co}, r_1^{SL,co}, \ldots, r_{N_{co}^{SL}-1}^{SL,co}\}$ . In addition, if a slot where the resource $r_j^{SL,co}$ is located is denoted as $t_{y(j)}^{SL,co}$ , a slot set corresponding to the set $R_{co}^{SL}$ is $T_{co}^{SL} = \{t_{y(0)}^{SL,co}, t_{y(1)}^{SL,co}, \ldots, t_{y(N_{co}^{SL}-1)}^{SL,co}\}$ ).

Optionally, $N_{co}^{SL}$ may be an integer greater than or equal to zero. Optionally, if $N_{co}^{SL} = 0$ , the set $R_{co}^{SL}$ is an empty set (for example, denoted as $R_{in}^{SL} = \emptyset$ ).

Optionally, $N_{co}^{SL}$ may be an integer greater than or equal to one.

Optionally, $N_{co}^{SL}$ may be a predefined or configured or pre-configured value. For example, $N_{co}^{SL} = 4$ . As another example, $N_{co}^{SL} = 6$ . As another example, $N_{co}^{SL} = 8$ .

Optionally, $N_{co}^{SL} \le N_{co,max}^{SL}$ . $N_{co,max}^{SL}$ may be a predefined or configured or pre-configured value. For example, $N_{co,max}^{SL} = 3$ . As another example, $N_{co,max}^{SL} = 4$ . As another example, $N_{co,max}^{SL} = 5$ . As another example, $N_{co,max}^{SL} = 6$ . As another example, $N_{co,max}^{SL} = 8$ .

Optionally, resources $r_0^{SL,co}$ , $r_1^{SL,co}$ , $\ldots\ldots$ , $r_{N_{co}^{SL}-1}^{SL,co}$ , are arranged in chronological order. Correspondingly, $t_{y(0)}^{SL,co} < t_{y(1)}^{SL,co} < \cdots < t_{y(N_{co}^{SL}-1)}^{SL,co}$ .

Optionally, for one or more integers $j$ satisfying $0 \le j < N_{co}^{SL}$ , the resource $r_j^{SL,co}$ may be represented by only a time-domain resource (i.e., a corresponding slot $t_{y(j)}^{SL,co}$ ), or the resource $r_j^{SL,co}$ may correspond to a set of all possible sub-channels (e.g., a set corresponding to any one or more consecutive sub-channels) in the frequency domain in the slot $t_{y(j)}^{SL,co}$ .

Optionally, for one or more integers $j$ satisfying $0 \leq j < N_{co}^{SL}$, the resource $r_{j}^{SL,co}$ may correspond to time-domain and frequency-domain information. For example, the resource $r_{j}^{SL,co}$ corresponds to a slot $t_{y(j)}^{SL,co}$ in the time domain, and corresponds to one or more sub-channels (e.g., consecutive sub-channels) in the frequency domain.

Optionally, the $N_{co}^{SL}$ resources may be represented by $N_{res,set}^{SL,in}$ sets (for example, respectively denoted as $R_{0}^{SL,co}$, $R_{1}^{SL,co}$, $\ldots\ldots$, $R_{N_{res,set}^{SL,in}-1}^{SL,co}$ ), wherein

- Optionally, resources in the sets $R_{0}^{SL,co}$, $R_{1}^{SL,co}$, $\ldots\ldots$, $R_{N_{res,set}^{SL,in}-1}^{SL,co}$ , respectively belong to one of $N_{res,set}^{SL,in}$ resource types indicated by $C_{res,set}^{SL,in}$ . For example, the resources in the set $R_{0}^{SL,co}$ belong to a first resource type indicated by $C_{res,set}^{SL,in}$ , and the resources in the set $R_{1}^{SL,co}$ belong to a second resource type indicated by $C_{res,set}^{SL,in}$ , and so on.
- Optionally, the sets $R_{0}^{SL,co}$, $R_{1}^{SL,co}$, $\ldots\ldots$, $R_{N_{res,set}^{SL,in}-1}^{SL,co}$ are mutually disjoint subsets of the set $R_{co}^{SL}$ .
- Optionally, the set $R_{co}^{SL}$ is a union of the sets $R_{0}^{SL,co}$, $R_{1}^{SL,co}$, $\ldots\ldots$, $R_{N_{res,set}^{SL,in}-1}^{SL,co}$ .

Optionally, the "resource type" of all resources in the resource set $R_{co}^{SL}$ is "colliding resource".

Optionally, the "resource type" of all resources in the resource set $R_{co}^{SL}$ is "non-preferred resource".

Optionally, for one or more (for example, all) integers $j$ satisfying $0 \leq j < N_{co}^{SL}$, the slot $t_{y(j)}^{SL,co}$ corresponding to the resource $r_{j}^{SL,co}$ is in the second time window $[t_{res,start}^{SL,in}, t_{res,end}^{SL,in}]$ .

Optionally, a step of determining the set $R_{co}^{SL}$ may include one or more of the following:

- initializing the set $R_{co}^{SL}$ to be an empty set;
- performing a sensing operation on the basis of one or more resource pools in the resource pool set $U$ (for example, the $N_{TX,pool}$ transmitting resource pools, as another example, the $N_{RX,pool}$ receiving resource pools, and as another example, the $N_{pool}$ resource pools);
- if the slot $t_{y(j)}^{SL}$ satisfies a first resource reservation condition, determining the slot $t_{y(j)}^{SL}$ as a slot (or resource) for inter-LTE coordination;
- if the slot $t_{y(j)}^{SL}$ satisfies the first resource reservation condition, adding the slot $t_{y(j)}^{SL}$ to the set $R_{co}^{SL}$ ;
- if the slot $t_{y(j)}^{SL}$ satisfies the first resource reservation condition, adding the slot $t_{y(j)}^{SL}$ to one of the $N_{res,set}^{SL,in}$ sets ( $R_{0}^{SL,co}$, $R_{1}^{SL,co}$, $\ldots\ldots$, $R_{N_{res,set}^{SL,in}-1}^{SL,co}$ ) corresponding to the resource type "colliding resource";
- if the slot $t_{y(j)}^{SL}$ satisfies the first resource reservation condition, adding the slot $t_{y(j)}^{SL}$ to one of the $N_{res,set}^{SL,in}$ sets ( $R_{0}^{SL,co}$, $R_{1}^{SL,co}$, $\ldots\ldots$, $R_{N_{res,set}^{SL,in}-1}^{SL,co}$ ) corresponding to the resource type "non-preferred resource".

Optionally, for the slot $t_{y(j)}^{SL}$ , the first resource reservation condition includes one or more of the following (in any combination of "and" or "or" where applicable):

- The slot $t_{y(j)}^{SL}$ is in the second time window $[t_{res,start}^{SL,in}, t_{res,end}^{SL,in}]$.

- The slot $t_{y(j)}^{SL}$ is in a slot set respectively corresponding to one (or, one or more) resource pool in the resource pool set $U$.

- The slot $t_{y(j)}^{SL}$ is in a slot set respectively corresponding to one (or, one or more) resource pool in the transmitting resource pool set $U_{TX}$.

- The slot $t_{y(j)}^{SL}$ is in a slot set respectively corresponding to one (or, one or more) resource pool in the receiving resource pool set $U_{RX}$.

- Resources in the slot $t_{y(j)}^{SL}$ are reserved (and/or assigned) in two (or, two or more) of the $N_{SCI}$ SCIs (for example, resources in any resource pool including the slot $t_{y(j)}^{SL}$ in the resource pool set $U$; as another example, resources in any resource pool including the slot $t_{y(j)}^{SL}$ in the transmitting resource pool set $U_{TX}$; as another example, resources in any resource pool including the slot $t_{y(j)}^{SL}$ in the receiving resource pool set $U_{RX}$).

- Resources in the slot $t_{y(j)}^{SL}$ are reserved (and/or assigned) in one (or, one or more; or, two or more) SCI satisfying a first SCI condition among the $N_{SCI}$ SCIs (for example, resources in any resource pool including the slot $t_{y(j)}^{SL}$ in the resource pool set $U$; as another example, resources in any resource pool including the slot $t_{y(j)}^{SL}$ in the transmitting resource pool set $U_{TX}$; as another example, resources in any resource pool including the slot $t_{y(j)}^{SL}$ in the receiving resource pool set $U_{RX}$).

- Resources in the slot $t_{y(j)}^{SL}$ are reserved (and/or assigned) in one (or, one or more; or, two or more) SCI not satisfying the first SCI condition among the $N_{SCI}$ SCIs (for example, resources in any resource pool including the slot $t_{y(j)}^{SL}$ in the resource pool set $U$; as another example, resources in any resource pool including the slot $t_{y(j)}^{SL}$ in the transmitting resource pool set $U_{TX}$; as another example, resources in any resource pool including the slot $t_{y(j)}^{SL}$ in the receiving resource pool set $U_{RX}$).

- Resources in the slot $t_{y(j)}^{SL}$ are reserved (and/or assigned) in one (or, one or more; or, two or more) SCI satisfying a second SCI condition among the $N_{SCI}$ SCIs (for example, resources in any resource pool including the slot $t_{y(j)}^{SL}$ in the resource pool set $U$; as another example, resources in any resource pool including the slot $t_{y(j)}^{SL}$ in the transmitting resource pool set $U_{TX}$; as another example, resources in any resource pool including the slot $t_{y(j)}^{SL}$ in the receiving resource pool set $U_{RX}$).

- Resources in the slot $t_{y(j)}^{SL}$ are reserved (and/or assigned) in one (or, one or more; or, two or more) SCI not satisfying the second SCI condition among the $N_{SCI}$ SCIs (for example, resources in any resource pool including the slot $t_{y(j)}^{SL}$ in the resource pool set $U$; as another example, resources in any resource pool including the slot $t_{y(j)}^{SL}$ in the transmitting resource pool set $U_{TX}$; as another example, resources in any resource pool including the slot $t_{y(j)}^{SL}$ in the receiving resource pool set $U_{RX}$).

- The slot $t_{y(j)}^{SL}$ is a slot in the slot set $T_{in}^{SL}$.

- The UE is scheduled with one (or, one or more) SL transmission in the slot $t_{y(j)}^{SL}$.

- The UE is scheduled with one (or, one or more) UL transmission in the slot $t_{y(j)}^{SL}$.

- The UE cannot perform SL transmission in the slot $t_{y(j)}^{SL}$ (for example, due to the capability limitations of the UE).

- The UE cannot perform SL reception in the slot $t_{y(j)}^{SL}$ (for example, due to the capability limitations of the UE).

Optionally, for any one of the $N_{SCI}$ SCIs, the first SCI condition includes one or more of the following (in any combination of "and" or "or" where applicable):

- The SCI is SCI detected (or received) by the UE (for example, SCI transmitted by another UE).
- The SCI is SCI transmitted in the $N_{pool}$ resource pools.
- The SCI is SCI transmitted in the $N_{TX,pool}$ transmitting resource pools.
- The SCI is SCI transmitted in the $N_{RX,pool}$ receiving resource pools.
- The SCI is SCI transmitted in the first time window $[t_{sci,start}^{SL,in}, t_{sci,end}^{SL,in}]$.
- The identifier indicated in the "destination ID" field in the SCI is equal to an identifier in the set $E_{in}^{SL}$.
- The identifier indicated in the "destination ID" field in the SCI is equal to a destination layer-1 identifier corresponding to an identifier in the set $E_{in}^{SL}$.
- The identifier indicated in the "destination ID" field in the SCI is equal to a source layer-1 identifier corresponding to an identifier in the set $E_{in}^{SL}$.
- The identifier indicated in the "source ID" field in the SCI is equal to an identifier in the set $E_{in}^{SL}$.
- The identifier indicated in the "source ID" field in the SCI is equal to a source layer-1 identifier corresponding to an identifier in the set $E_{in}^{SL}$.
- The identifier indicated in the "source ID" field in the SCI is equal to a destination layer-1 identifier corresponding to an identifier in the set $E_{in}^{SL}$.
- The identifier indicated in the "destination ID" field and the identifier indicated in the "source ID" field in the SCI are respectively equal to a "destination ID" (or a destination layer-1 identifier corresponding to the "destination ID") and a "source ID" (or a source layer-1 identifier corresponding to the "source ID") of an SL connection in the set $L_{in}^{SL}$.
- The identifier indicated in the "destination ID" field and the identifier indicated in the "source ID" field in the SCI are respectively equal to a "source ID" (or a source layer-1 identifier corresponding to the "source ID") and a "destination ID" (or a destination layer-1 identifier corresponding to the "destination ID") of an SL connection in the set $L_{in}^{SL}$.
- The identifier indicated in the "destination ID" field, the identifier indicated in the "source ID" field, and the cast type indicated in the "cast type" field in the SCI are respectively equal to a "destination ID" (or a destination layer-1 identifier corresponding to the "destination ID"), a "source ID" (or a source layer-1 identifier corresponding to the "source ID"), and the "cast type" of an SL connection in the set $L_{in}^{SL}$.
- The identifier indicated in the "destination ID" field, the identifier indicated in the "source ID" field, and the cast type indicated in the "cast type" field in the SCI are respectively equal to a "source ID" (or a source layer-1 identifier corresponding to the "source ID"), a "destination ID" (or a destination layer-1 identifier corresponding to the "destination ID"), and the "cast type" of an SL connection in the set $L_{in}^{SL}$.

Optionally, for any one of the $N_{SCI}$ SCIs, the second SCI condition includes one or more of the following (in any combination of "and" or "or" where applicable):

- The SCI is SCI transmitted by the UE.
- The SCI is SCI transmitted in the $N_{pool}$ resource pools.

- The SCI is SCI transmitted in the $N_{TX,pool}$ transmitting resource pools.
- The SCI is SCI transmitted in the $N_{RX,pool}$ receiving resource pools.
- The SCI is SCI transmitted in the first time window $[t_{sci,start}^{SL,in}, t_{sci,end}^{SL,in}]$.
- The identifier indicated in the "destination ID" field in the SCI is equal to an identifier in the set $E_{in}^{SL}$.
- The identifier indicated in the "destination ID" field in the SCI is equal to a destination layer-1 identifier corresponding to an identifier in the set $E_{in}^{SL}$.
- The identifier indicated in the "destination ID" field in the SCI is equal to a source layer-1 identifier corresponding to an identifier in the set $E_{in}^{SL}$.
- The identifier indicated in the "source ID" field in the SCI is equal to a source layer-1 identifier of the UE.
- The identifier indicated in the "source ID" field in the SCI is equal to a source layer-1 identifier corresponding to a source layer-2 identifier of the UE.
- The identifier indicated in the "destination ID" field and the identifier indicated in the "source ID" field in the SCI are respectively equal to a "destination ID" (or a destination layer-1 identifier corresponding to the "destination ID") and a "source ID" (or a source layer-1 identifier corresponding to the "source ID") of an SL connection in the set $L_{in}^{SL}$.
- The identifier indicated in the "destination ID" field and the identifier indicated in the "source ID" field in the SCI are respectively equal to a "source ID" (or a source layer-1 identifier corresponding to the "source ID") and a "destination ID" (or a destination layer-1 identifier corresponding to the "destination ID") of an SL connection in the set $L_{in}^{SL}$.
- The identifier indicated in the "destination ID" field, the identifier indicated in the "source ID" field, and the cast type indicated in the "cast type" field in the SCI are respectively equal to a "destination ID" (or a destination layer-1 identifier corresponding to the "destination ID"), a "source ID" (or a source layer-1 identifier corresponding to the "source ID"), and the "cast type" of an SL connection in the set $L_{in}^{SL}$.
- The identifier indicated in the "destination ID" field, the identifier indicated in the "source ID" field, and the cast type indicated in the "cast type" field in the SCI are respectively equal to a "source ID" (or a source layer-1 identifier corresponding to the "source ID"), a "destination ID" (or a destination layer-1 identifier corresponding to the "destination ID"), and the "cast type" of an SL connection in the set $L_{in}^{SL}$.

In addition, optionally, in step S105, the several resources are indicated to another protocol entity. For example, the resource set $R_{co}^{SL}$ is indicated to the first protocol layer entity (for example, the second protocol layer entity performing step S 105 indicates the resource set $R_{co}^{SL}$ to the first protocol layer entity).

Optionally, in Embodiment 1 of the present invention, the first protocol layer entity is a MAC layer (or referred to as MAC sub-layer) protocol entity, or an RLC layer protocol entity, or a PDCP layer protocol entity, or an RRC layer protocol entity, or a PC5-RRC layer protocol entity, or a PC5-S layer protocol entity, or a physical layer (or referred to as PHY layer) protocol entity.

Optionally, in Embodiment 1 of the present invention, the second protocol layer entity is a physical layer (or referred to as PHY layer) protocol entity, or a MAC layer (or referred to as MAC sub-layer) protocol entity, or an RLC layer protocol entity, or a PDCP layer protocol entity, or an RRC layer protocol entity, or a PC5-RRC layer protocol entity, or a PC5-S layer protocol entity.

Optionally, in Embodiment 1 of the present invention, step S101, step S103, and step S105 are performed by the second protocol layer entity of the UE (where applicable).

Thus, according to Embodiment 1, in the method provided in the present invention, a suitable filtering condition is set in the process of determining an inter-UE coordination resource set, so as to reduce SCIs that need to be analyzed and processed, thereby ensuring that an inter-LTE coordination function is executed only for a destination UE or an SL connection satisfying a certain condition, while preventing a large number of messages indicating the same or similar inter-UE coordination resources from being present on an SL at the same time to block the SL.

[Embodiment 2]

A method performed by user equipment according to Embodiment 2 of the present invention will be described below with reference to FIG. 2.

FIG. 2 is a flowchart showing a method performed by user equipment according to Embodiment 2 of the present invention.

As shown in FIG. 2, in Embodiment 2 of the present invention, the steps performed by the user equipment (UE) include: step S201 and step S203. For convenience, the UE may also be referred to as "LTE A".

Specifically, in step S201, SCI is determined. For example, the value of one or more fields in a 1st-stage SCI format and/or a 2nd-stage SCI format corresponding to the SCI is determined.

Optionally, the 1st-stage SCI format may be SCI format 1-A or another 1st-stage SCI format.

Optionally, the 2nd-stage SCI format may be SCI format 2-A or SCI format 2-B or another 2nd-stage SCI format.

Optionally, the SCI may correspond to (or be associated with) one "destination LTE". For example, the destination LTE may be a LTE corresponding to or indicated in the "destination ID" field in the 2nd-stage SCI format. For convenience, the destination LTE may also be referred to as "UE B".

Optionally, LTE B may correspond to more than one LTE (e.g., when the SL transmission corresponding to or associated with the 1st-stage SCI format is a broadcast transmission or a groupcast transmission).

For convenience, a set of resources indicated by the SCI (for example, indicated in the "frequency resource assignment" and/or "time resource assignment" fields in the 1st-stage SCI format) is denoted as

$$R_{rsvp}^{SL,u} = \{r_0^{SL,u,rsvp}, \ldots, r_{N_{rsvp}^{SL,u}-1}^{SL,u,rsvp}\}$$, and correspondingly, and slots where $r_0^{SL,u,rsvp}, \ldots, r_{N_{rsvp}^{SL,u}-1}^{SL,u,rsvp}$ are located are respectively denoted as $t'^{SL,u}_{y_0}, \ldots, t'^{SL,u}_{y_{N_{rsvp}^{SL,u}-1}}$, wherein

- $u$ is a resource pool corresponding to the resources in the set $R_{rsvp}^{SL,u}$. Optionally, the resource pool $u$ is a resource pool in a resource pool set $U_{m2,TX}$. The resource pool set $U_{m2,TX}$ may be configured or pre-configured by means of one or more higher layer protocol parameters. For example, the resource pool set $U_{m2,TX}$ is configured by means of a parameter *sl-TxPoolSelectedNormal*. As another example, the resource pool set $U_{m2,TX}$ is configured by means of a parameter *sl-TxPoolExceptional*. As another example, the resource pool set $U_{m2,TX}$ is configured by means of the parameter *sl-TxPoolSelectedNormal* and the parameter *sl-TxPoolExceptional* collectively.

- $N_{rsvp}^{SL,u}$ is the number of elements in the set $R_{rsvp}^{SL,u}$. For example, $N_{rsvp}^{SL,u} = 1$. As another example, $N_{rsvp}^{SL,u} = 2$. As another example, $N_{rsvp}^{SL,u} = 3$.

- Optionally, $r_0^{SL,u,rsvp}$ is an SL resource corresponding to a PSCCH corresponding to (or associated with) the SCI and/or a corresponding PSSCH. Correspondingly, the slot $t'^{SL,u}_{y_0}$ is a slot where the PSCCH corresponding to (or associated with) the SCI and/or the corresponding PSSCH is located.

For convenience, $\bar{R}_{rsvp}^{SL,u} = \{r_1^{SL,u,rsvp}, \ldots, r_{N_{rsvp}^{SL,u}-1}^{SL,u,rsvp}\}$,

For example, if $N_{rsvp}^{SL,u} = 2$, then $R_{rsvp}^{SL,u} = \{r_0^{SL,u,rsvp}, r_1^{SL,u,rsvp}\}$, $\bar{R}_{rsvp}^{SL,u} = \{r_1^{SL,u,rsvp}\}$. As another example, if $N_{rsvp}^{SL,u} = 1$, then $R_{rsvp}^{SL} = \{r_0^{SL,u,rsvp}\}$, $\bar{R}_{rsvp}^{SL,u}$ is an empty set.

Optionally, the resource type corresponding to the resource $r_0^{SL,u,rsvp}$ is "reserved resource" (or "resource being reserved", or "resource to be reserved", or "resource for reservation", or "allocated resource", or "resource being allocated", or "resource to be allocated", or "resource for allocation").

Optionally, when $i$ is different ($0 \le i < N_{rsvp}^{SL,u}$, or $1 \le i < N_{rsvp}^{SL,u}$), the resource type corresponding to the resource $r_i^{SL,u,rsvp}$ may be different. Specifically, for example, the resource type corresponding to the resource $r_i^{SL,u,rsvp}$ may be one of the following:

- "Reserved resource" (or "resource being reserved", or "resource to be reserved", or "resource for reservation", or "allocated resource", or "resource being allocated", or "resource to be allocated", or "resource for allocation").
- "Released resource" (or "resource being released", or "resource to be released", or "resource for release").
- "Colliding resource".
- "Preferred resource".
- "Non-preferred resource".
- "Inter-UE coordination resource". For example, the "inter-UE coordination resource" may be a general name of one or more resource types. Optionally, the actual resource type (e.g., "reserved resource", or "allocated resource", or "released resource", or "colliding resource", or "preferred resource", or "non-preferred resource") may be configured or pre-configured by means of a higher layer parameter, or indicated by means of a MAC CE, or indicated by means of SCI (e.g., the SCI).

Optionally, the SCI may indicate resource types respectively corresponding to one or more (for example, all) resources in the set $R_{rsvp}^{SL,u}$ (or the set $\bar{R}_{rsvp}^{SL,u}$). For example, each value (or each valid value) of a field (for example, referred to as the "resource type" field) in the "SCI format" (or SCI format combination) respectively indicates one resource type combination (for example, a combination of resource types respectively corresponding to the resources $r_0^{SL,u,rsvp}, ..., r_{N_{rsvp}^{SL,u}-1}^{SL,u,rsvp}$; as another example, a combination of resource types respectively corresponding to $r_1^{SL,u,rsvp}, ..., r_{N_{rsvp}^{SL,u}-1}^{SL,u,rsvp}$). Optionally, one or more values (for example, referred to as "invalid values") of the "resource type" field do not indicate any resource type combination.

For example, $N_{rsvp}^{SL,u} = 2$, and two values of the "resource type" field respectively indicate combinations of resource types respectively corresponding to the resources in the set $\bar{R}_{rsvp}^{SL,u} = \{r_1^{SL,u,rsvp}\}$. Specifically, for example, "0" indicates that the resource $r_1^{SL,u,rsvp}$ is a reserved resource, and "1" indicates that the resource $r_1^{SL,u,rsvp}$ is a colliding resource.

As another example, $N_{rsvp}^{SL,u} = 3$, and four values of the "resource type" field respectively indicate combinations of resource types respectively corresponding to the resources in the set $\bar{R}_{rsvp}^{SL,u} = \{r_1^{SL,u,rsvp}, r_2^{SL,u,rsvp}\}$. Specifically, for example, "0" indicates that the resource $r_1^{SL,u,rsvp}$ and the resource $r_2^{SL,u,rsvp}$ are both reserved resources; "1" indicates that the resource $r_1^{SL,u,rsvp}$ is a reserved resource, and the resource $r_2^{SL,u,rsvp}$ is a colliding resource; "2" indicates that the resource $r_1^{SL,u,rsvp}$ is a colliding resource, and the resource $r_2^{SL,u,rsvp}$ is a reserved resource; "3" indicates that the resource $r_1^{SL,u,rsvp}$ and the resource $r_2^{SL,u,rsvp}$ are both colliding resources.

Optionally, under a certain condition (for example, when the corresponding resource type is a predefined or configured or pre-configure value, or when the corresponding resource type is one of several predefined or configured or pre-configure values, or depending on configuration of another higher layer parameter, or according to an indication in the "frequency resource assignment" field or another field in the SCI), the resource $r_i^{SL,u,rsvp}$ ( $0 \leq i < N_{rsvp}^{SL,u}$, or $1 \leq i < N_{rsvp}^{SL,u}$) may be represented by only a time resource (e.g., a corresponding slot $t'_{y_i}^{SL,u}$). For example, the resource $r_i^{SL,u,rsvp}$ may correspond to a set consisting of all sub-channels in the frequency domain in the slot $t'_{y_i}^{SL,u}$ in the resource pool $u$, or a set of all possible sub-channels (e.g., a set corresponding to any one or more consecutive sub-channels).

In addition, in step S203, the SCI is transmitted.

For example, the PSCCH and/or the PSSCH corresponding to (or associated with) the SCI is transmitted in the slot $t'^{SL,u}_{y_0}$ in the resource pool *u*.

- Optionally, the PSCCH carries the 1st-stage SCI format.
- Optionally, the PSSCH carries the 2nd-stage SCI format.
- Optionally, the starting PRB of the PSCCH is the lowest PRB in the lowest sub-channel corresponding to the PSSCH.

Optionally, in Embodiment 2 of the present invention, "resource type" may be replaced with "resource state" or "resource feature" or "resource use".

Optionally, in Embodiment 2 of the present invention, the "colliding resource" may be determined according to the method described in Embodiment 1 of the present invention.

Optionally, in Embodiment 2 of the present invention, the "non-preferred resource" may be determined according to the method described in Embodiment 1 of the present invention.

Thus, according to Embodiment 2, in the method provided in the present invention, a resource type indication is added to the existing SCI format, so that a resource reserved by TX LTE for itself and/or a resource for inter-LTE coordination (e.g., a resource reserved for RX LTE, a resource having a detected collision, etc.) can also be indicated in the existing SCI format in a backward compatible manner, thereby implementing inter-LTE coordination functions with exceedingly low signaling overhead.

[Embodiment 3]

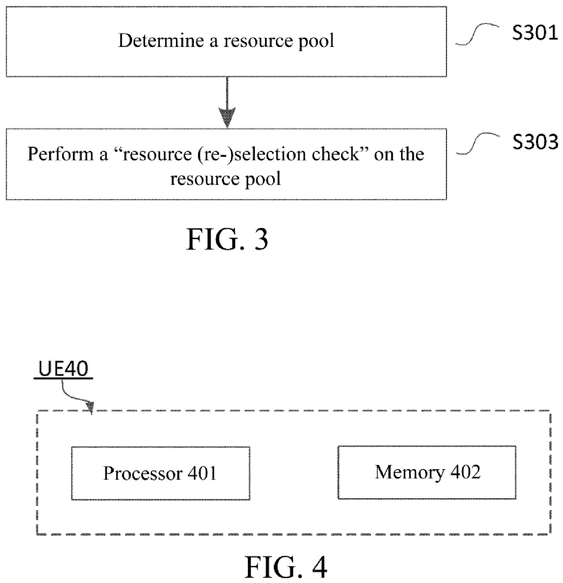

A method performed by user equipment according to Embodiment 3 of the present invention will be described below with reference to FIG. 3.

FIG. 3 is a flowchart showing a method performed by user equipment according to Embodiment 3 of the present invention.

As shown in FIG. 3, in Embodiment 3 of the present invention, the steps performed by the user equipment (UE) include: step S301 and step S303.

Specifically, in step S301, a resource pool (for example, denoted as *u*) is determined.

Optionally, the resource pool *u* is a transmitting resource pool.

Optionally, the resource pool *u* is a resource pool in a resource pool set $U_{m2,TX}$. The resource pool set $U_{m2,TX}$ may be configured or pre-configured by means of one or more higher layer protocol parameters. For example, the resource pool set $U_{m2,TX}$ is configured by means of the parameter *sl-TxPoolSelectedNormal.* As another example, the resource pool set $U_{m2,TX}$ is configured by means of the parameter *sl-TxPoolExceptional.* As another example, the resource pool set $U_{m2,TX}$ is configured by means of the parameter *sl-TxPoolSelectedNormal* and the parameter *sl-TxPoolExceptional* collectively.

Optionally, when a first SL transmission condition is satisfied, the resource pool *u* is determined. The first SL transmission condition may include one or more of the following (in any combination of "and" or "or"):

- The UE has been configured to use SL resource allocation mode 2. Correspondingly, optionally, the LTE determines, on the basis of sensing and/or partial sensing and/or random selection (or random resource selection) and/or other resource selection mechanisms, that SL transmission is performed on one (or, one or more) resource pool in an SL carrier.
- Data needs to be transmitted on one (or, one or more) logical channel, wherein

  ♦ Optionally, the LTE has not selected a resource pool for the one (or more) logical channel. Optionally, the "resource pool" is a resource pool on which transmission of data for the logical channel is allowed.

- The UE has created a sidelink (SL) grant (or referred to as "selected sidelink grant"), wherein

  ♦ Optionally, the SL grant corresponds to transmission of one MAC PDU.
  ♦ Optionally, the SL grant corresponds to transmission of a plurality of MAC PDUs.
  ♦ Optionally, the term "create" may also be referred to as "select to create".

Optionally, the resource pool *u* is determined for a sidelink (SL) process (for example, denoted as $p^{SL}_u$).

Optionally, a resource pool is determined for each SL process satisfying the first SL transmission condition.

Optionally, the resource pool *u* is a resource pool randomly selected (for example, randomly selected according to an equal probability) from the resource pool set $U_{m2,TX}$, or a resource pool that is randomly selected, or a resource pool determined in another manner.

In addition, optionally, in step S303, a "resource (re-)selection check" (or referred to as "TX resource (re-)selection check") is performed on the resource pool *u.*

Optionally, the "resource (re-)selection check" is not only applicable to resource selection, but also applicable to resource reselection.

Optionally, the "resource (re-)selection check" is performed for the SL process $p_u^{SL}$ .

Optionally, if a first resource (re-)selection condition is satisfied, one or more of the following are performed:

- Removing the SL grant associated with the SL process $p_u^{SL}$ . For example, if the SL grant is available, the SL grant is removed.
- Triggering resource (re-)selection (or referred to as "TX resource (re-)selection).

Optionally, the "first resource (re-)selection condition" may include one or more of the following (in any combination of "and" or "or" where applicable):

- The value of an SL resource reselection counter (e.g., represented by

  *SL_RESOURCE_RESELECTION_COUNTER)* is 0, and when
  *SL_RESOURCE_RESELECTION_COUNTER* is equal to 1, a value randomly selected by the LTE in the interval [0, 1] according to an equal probability is greater than (or, greater than or equal to) a configured value (for example, a value configured by means of an RRC parameter *sl-ProbResourceKeep*).

- The resource pool *u* is configured or reconfigured, for example, configured or reconfigured by means of RRC.
- No corresponding SL grant is present in the resource pool *u.*
- In a past period of time (e.g., in the past one second), no transmission or retransmission was performed on any resource indicated in the SL grant.
- Among transmission opportunities corresponding to resources indicated in the SL grant, the number of consecutive, unused transmission opportunities reaches (or is equal to) a given value (e.g., a value configured by means of a parameter *sl-ReselectAfter*).
- The SL grant cannot accommodate an RLC SDU (e.g., the RLC SDU cannot be accommodated even when the allowed maximum MCS is used), and the LTE selects not to segment the RLC SDU.
- Transmission performed by using the SL grant (e.g., transmission on one or more or any resource indicated in the SL grant) cannot satisfy a latency requirement on data in a corresponding logical channel (e.g., in the case that a corresponding priority is considered), and the LTE selects not to perform transmission corresponding to a MAC PDU.
- A protocol layer entity (for example, a physical layer protocol entity, and as another example, an RRC layer protocol entity) of the LTE indicates resource (re-)selection. For example, since the received SCI (for example, the SCI determined according to the method in Embodiment 2 of the present invention) indicates one or more "colliding resources" (or one or more "preferred resources", or one or more "non-preferred resources"), the physical layer protocol entity of the UE indicates resource (re-)selection to the MAC layer protocol entity of the UE.
- A protocol layer entity (for example, a physical layer protocol entity, and as another example, an RRC layer protocol entity) of the UE indicates that a "colliding resource" (or "preferred resource", or "non-preferred resource", or "inter-LTE coordination resource") is present. For example, since the received SCI (for example, the SCI determined according to the method in Embodiment 2 of the present invention) indicates one or more "colliding resources" (or one or more "preferred resources", or one or more "non-preferred resources"), the physical layer protocol entity of the UE indicates, to the MAC layer protocol entity of the UE, that a "colliding resource" (or "preferred resource", or "non-preferred resource", or "inter-UE coordination resource") is present.
- A protocol layer entity (for example, a physical layer protocol entity, and as another example, an RRC layer protocol entity) of the LTE indicates one or more "colliding resources" (or "preferred resources", or "non-preferred resources", or "inter-UE coordination resources"). For example, since the received SCI (for example, the SCI determined according to the method in Embodiment 2 of the present invention) indicates one or more "colliding resources" (or one or more "preferred resources", or one or more "non-preferred resources"), the physical layer protocol entity of the UE indicates the one or more "colliding resources" (or "preferred resources", or "non-preferred resources", or "inter-LTE coordination resources") to the MAC layer protocol entity of the UE.
- The received SCI (for example, the SCI determined according to the method in Embodiment 2 of the present invention) indicates one or more "colliding resources" (or one or more "preferred resources", or one or more "non-preferred resources", or one or more "inter-UE coordination resources").

- $N_{co,count}^{SL,u}$ resources satisfying a first SL resource type condition are present in the SL grant (or, in one or more resources indicated by the SL grant), wherein

  ◆ Optionally, $N_{co,count}^{SL,u}$ is a predefined or configured or pre-configured integer. For example, $N_{co,count}^{SL,u} = 1$.

  ◆ Optionally, $N_{co,count}^{SL,u} \geq N_{co,min}^{SL,u}$, where $N_{co,min}^{SL,u}$ is a predefined or configured or preconfigured integer (e.g., $N_{co,min}^{SL,u} = 1$).

  ◆ Optionally, for a resource (for example, denoted as $r_i^{SL,u}$) indicated by the SL grant, the first SL resource type condition may include one or more of the following (in any combination of "and" or "or" where applicable):

    ▪ The resource $r_i^{SL,u}$ overlaps with one (or, one or more) resource in a resource set *R*.

    ▪ The resource $r_i^{SL,u}$ overlaps with one (or, one or more) "reserved resource" in the resource set *R*.

    ▪ The resource $r_i^{SL,u}$ overlaps with one (or, one or more) "allocated resource" in the resource set *R*.

    ▪ The resource $r_i^{SL,u}$ overlaps with one (or, one or more) "colliding resource" in the resource set *R*.

    ▪ The resource $r_i^{SL,u}$ overlaps with one (or, one or more) "preferred resource" in the resource set *R.*

    ▪ The resource $r_i^{SL,u}$ overlaps with one (or, one or more) "non-preferred resource" in the resource set *R.* wherein

    ▪ Optionally, the resource set *A* is a resource set indicated in an inter-UE coordination message received by the UE (for example, transmitted by another UE) (for example, the resource set $R_{co}^{SL}$ related to inter-LTE coordination and determined according to the method in Embodiment 1 of the present invention).

    ▪ Optionally, for a resource X and a resource Y, the term "overlap" may mean that the resource X and the resource Y are in the same slot of the same resource pool, and frequency-domain resources corresponding to the resource X and the resource Y overlap in one or more sub-channels (or resource blocks, or resource block groups, or resource elements, or subcarriers).

    ▪ Optionally, for a resource X and a resource Y, the term "overlap" may mean that the resource X and the resource Y are in the same slot. For example, the resource X and the resource Y are in the same slot of the same resource pool, and frequency-domain resources corresponding to the resource X and the resource Y overlap in one or more sub-channels (or resource blocks, or resource block groups, or resource elements, or subcarriers). As another example, the resource X and the resource Y are in the same slot of the same resource pool, and frequency-domain resources corresponding to the resource X and the resource Y do not overlap with each other, for example, do not overlap with each other in any sub-channel (or resource block, or resource block group, or resource element, or subcarrier). As another example, the resource X and the resource Y are in the same slot of different resource pools, and frequency-domain resources corresponding to the resource X and the resource Y do not overlap with each other, for example, do not overlap with each other in any sub-channel (or resource block, or resource block group, or resource element, or subcarrier).

Optionally, in Embodiment 3 of the present invention, step S301 and/or step S303 is performed by a MAC sub-layer (or referred to as MAC layer) protocol entity of the UE (e.g., in the corresponding step, "the LTE" may be replaced with "the MAC sub-layer protocol entity of the UE").

Thus, according to Embodiment 3, in the method provided in the present invention, a new resource (re-)selection condition is introduced, so that when a UE receives an inter-UE coordination message from another UE, resource reselection can be performed in a timely manner, thereby greatly reducing SL transmission performance loss caused by colliding resources reserved by different UEs or the like.

[Variant Embodiment]

Hereinafter, FIG. 4 is used to illustrate user equipment that can perform the method performed by user equipment described in detail above in the present invention as a variant embodiment.

FIG. 4 shows a block diagram of user equipment (UE) according to the present invention.

As shown in FIG. 4, the user equipment (UE) 40 includes a processor 401 and a memory 402. The processor 401 may include, for example, a microprocessor, a microcontroller, an embedded processor, and the like. The memory 402 may include, for example, a volatile memory (such as a random access memory (RAM)), a hard disk drive (HDD), a non-volatile memory (such as a flash memory), or other memories. The memory 402 stores program instructions. The instructions, when run by the processor 401, can implement the above method performed by user equipment as described in detail in the present invention.

The method and related equipment according to the present invention have been described above in combination with preferred embodiments. It should be understood by those skilled in the art that the method shown above is only exemplary, and the above embodiments can be combined with one another as long as no contradiction arises. The method of the present invention is not limited to the steps or sequences illustrated above. The network node and user equipment illustrated above may include more modules. For example, the network node and user equipment may further include modules that can be developed or will be developed in the future to be applied to a base station, an AMF, a UPF, an MME, an S-GW, or UE, and the like. Various identifiers shown above are only exemplary, and are not meant for limiting the present invention. The present invention is not limited to specific information elements serving as examples of these identifiers. A person skilled in the art could make various alterations and modifications according to the teachings of the illustrated embodiments. Those skilled in the art should understand that part or all of the mathematical expressions, mathematical equations, or mathematical inequalities may be simplified or transformed or rewritten to some extent, for example, incorporating constant terms, or interchanging two addition terms, or interchanging two multiplication terms, or moving a term from the left side of an equation or inequality to the right side after changing the plus or minus sign thereof, or moving a term from the right side of an equation or inequality to the left side after changing the plus or minus sign thereof or the like. Mathematical expressions, mathematical equations, or mathematical inequalities before and after the simplification or transformation or rewriting may be considered to be equivalent to each other. Those skilled in the art would appreciate that a subset of a set may be the set itself. For example, a subset of $A = \{a_1, a_2\}$ may be $\{a_1, a_2\}$, or $\{a_1\}$, or $\{a_2\}$, or an empty set.

It should be understood that the above-described embodiments of the present invention may be implemented by software, hardware, or a combination of software and hardware. For example, various components of the base station and user equipment in the above embodiments can be implemented by multiple devices, and these devices include, but are not limited to: an analog circuit device, a digital circuit device, a digital signal processing (DSP) circuit, a programmable processor, an application specific integrated circuit (ASIC), a field programmable gate array (FPGA), and a complex programmable logic device (CPLD), and the like.

In the present invention, the term "base station" may refer to a mobile communication data and/or control switching center having specific transmission power and a specific coverage area and including functions such as resource allocation and scheduling, data reception and transmission, and the like. "User equipment" may refer to a user mobile terminal, for example, including terminal devices that can communicate with a base station or a micro base station wirelessly, such as a mobile phone, a laptop computer, and the like.

In addition, the embodiments of the present invention disclosed herein may be implemented on a computer program product. More specifically, the computer program product is a product provided with a computer-readable medium having computer program logic encoded thereon. When executed on a computing device, the computer program logic provides related operations to implement the above technical solutions of the present invention. When executed on at least one processor of a computing system, the computer program logic causes the processor to perform the operations (methods) described in the embodiments of the present invention. Such setting of the present invention is typically provided as software, codes and/or other data structures provided or encoded on the computer readable medium, e.g., an optical medium (e.g., compact disc read-only memory (CD-ROM)), a flexible disk or a hard disk and the like, or other media such as firmware or micro codes on one or more read-only memory (ROM) or random access memory (RAM) or programmable read-only memory (PROM) chips, or a downloadable software image, a shared database and the like in one or more modules. Software or firmware or such configuration may be installed on a computing device such that one or more processors in the computing device perform the technical solutions described in the embodiments of the present invention.

In addition, each functional module or each feature of the base station device and the terminal device used in each of the above embodiments may be implemented or executed by a circuit, which is usually one or more integrated circuits. Circuits designed to execute various functions described in this description may include general-purpose processors, digital signal processors (DSPs), application specific integrated circuits (ASICs) or general-purpose integrated circuits, field programmable gate arrays (FPGAs) or other programmable logic devices, discrete gates or transistor logic, or discrete hardware components, or any combination of the above. The general purpose processor may be a microprocessor, or the processor may be an existing processor, a controller, a microcontroller, or a state machine. The aforementioned general purpose processor or each circuit may be configured by a digital circuit or may be configured by a logic circuit. Furthermore, when advanced technology capable of replacing current integrated circuits emerges due to advances in semiconductor technology, the present invention can also use integrated circuits obtained using this advanced technology.

While the present invention has been illustrated in combination with the preferred embodiments of the present invention, it will be understood by those skilled in the art that various modifications, substitutions, and alterations may be made to the present invention without departing from the spirit and scope of the present invention. Therefore, the present invention should not be limited by the above-described embodiments, but should be defined by the appended claims and their equivalents.

**Claims**

1. A method performed by user equipment (UE), **characterized by** comprising:

   acquiring one or more pieces of information related to inter-UE coordination, the one or more pieces of information comprising configuration information of a resource pool set, a slot set, a sensing window, and a coordination resource window; and
   determining, according to SCI detected in the sensing window and the resource pool set, several resources located in the coordination resource window and satisfying a first resource collision condition.
   wherein
   the first resource collision condition comprises: resources in the same slot in the coordination resource window being reserved in two or more SCIs detected in the sensing window, and the slot belonging to the slot set.

2. User equipment, comprising:

   a processor; and
   a memory, having instructions stored therein,
   wherein the instructions, when run by the processor, perform the method according to claim 1.

Acquire one or more pieces of information related to inter-UE coordination — S101

Determine several resources related to inter-UE coordination — S103

Indicate the several resources to another protocol entity — S105

FIG. 1

Determine SCI — S201

Transmit the SCI — S203

FIG. 2

Determine a resource pool — S301

Perform a "resource (re-)selection check" on the resource pool — S303

FIG. 3

UE40

Processor 401    Memory 402

FIG. 4

## INTERNATIONAL SEARCH REPORT

| International application No. |
| --- |
| **PCT/CN2022/084772** |

### A. CLASSIFICATION OF SUBJECT MATTER

H04W 4/40(2018.01)i; H04W 72/04(2009.01)i

According to International Patent Classification (IPC) or to both national classification and IPC

### B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 侧行, 边链路, 侧链路, 副链路, 车联网, 设备到设备, 资源, 资源池, 时隙, 感测, 协作, 配置, 直行控制信息, 副链路控制信息, 冲突, 碰撞, 重叠, 预留, 窗口, sidelink, SL, V2X, D2D, device to device, V2V, vehicle to everything, resource, resource pool, time slot, interval, sensing, cooperate, configuration, SCI, sidelink control information, collision, collide, overlap, window

### C. DOCUMENTS CONSIDERED TO BE RELEVANT

| Category* | Citation of document, with indication, where appropriate, of the relevant passages | Relevant to claim No. |
| --- | --- | --- |
| X | CN 111670595 A (LENOVO (BEIJING) LTD.) 15 September 2020 (2020-09-15) description, paragraphs [0010]-[0105] | 1, 2 |
| A | CN 110972290 A (CHINA ACADEMY OF INFORMATION AND COMMUNICATIONS TECHNOLOGY) 07 April 2020 (2020-04-07) entire document | 1, 2 |
| A | CN 112087733 A (INDUSTRIAL TECHNOLOGY RESEARCH INSTITUTE) 15 December 2020 (2020-12-15) entire document | 1, 2 |
| A | WO 2021030561 A1 (IDAC HOLDINGS, INC.) 18 February 2021 (2021-02-18) entire document | 1, 2 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **23 May 2022** | **13 June 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

| International application No. |
|---|
| **PCT/CN2022/084772** |

| Patent document cited in search report | | | Publication date (day/month/year) | Patent family member(s) | Publication date (day/month/year) |
|---|---|---|---|---|---|
| CN | 111670595 | A | 15 September 2020 | None | |
| CN | 110972290 | A | 07 April 2020 | None | |
| CN | 112087733 | A | 15 December 2020 | None | |
| WO | 2021030561 | A1 | 18 February 2021 | None | |

Form PCT/ISA/210 (patent family annex) (January 2015)